# EUROPÄISCHE PATENTSCHRIFT

(11) **EP 2 067 339 B1**
(45) Veröffentlichungstag und Bekanntmachung des Hinweises auf die Patenterteilung: **05.11.2014**
(21) Anmeldenummer: 07803341.2
(22) Anmeldetag: 07.09.2007
(51) Int. Cl.: H04L 29/06, G06F 21/00, G06Q 30/06, G11B 20/00, H04N 7/16, H04N 21/266, H04N 21/414, H04N 21/4627, H04N 21/472, H04N 21/8355

(54) **Vorrichtung und Verfahren zur gesicherten Verteilung von Inhalten in einem Telekommunikationsnetzwerk**
Apparatus and method for secure content distribution in a telecommunication network
Dispositif et procédé de distribution sécurisée des contenus dans un réseau de télécommunication

(30) Priorität: 20.09.2006 DE 102006044299
(43) Veröffentlichungstag der Anmeldung: 10.06.2009
(73) Patentinhaber: Nokia Solutions and Networks GmbH & Co. KG, 81541 Munich (DE)
(72) Erfinder: HAHNEFELD, Dirk, 82131 Gauting (DE); LÖBIG, Norbert, 64291 Darmstadt (DE)
(74) Vertreter: Weidel, Gottfried
(86) Internationale Anmeldenummer: PCT/EP2007/059402
(87) Internationale Veröffentlichungsnummer: WO 2008/034726

(56) Entgegenhaltungen:
- INTEL CORPORATION AND OTHERS: "AACS - Introduction and Common Cryptographic Elements" INTERNET CITATION, [Online] 19. März 2006 (2006-03-19), XP002438245 Gefunden im Internet: URL:http://web.archive.org/web/20060319164 126/www.aacsla.com/specificatio ns/specs091/AACS_Spec_Common_0.91.pdf> [gefunden am 2007-06-19]
- "Content Protection System Architecture : A Comprehensive Framework for Content Protection, Revision 0.81" INTERNET CITATION, [Online] 17. Februar 2000 (2000-02-17), XP002226101 Gefunden im Internet: URL:http://www.4centity.com/data/te.pdf> [gefunden am 2002-12-23]
- "IBM RESPONSE TO DVB-CPT CALL FOR PROPOSALS FOR CONTENT PROTECTION & COPY MANAGEMENT:XCP CLUSTER PROTOCOL" INTERNET CITATION, [Online] 19. Oktober 2001 (2001-10-19), XP001148193 Gefunden im Internet: URL:HTTP://WWW.ALMADEN.IBM.COM/SOFTWARE/DS /CONTENTASSURANCE/PAPERS/XCP_DVB.P>

## Beschreibung

Die vorliegende Erfindung bezieht sich auf eine Vorrichtung und ein Verfahren zur gesicherten Verteilung von Inhalten in einem Telekommunikationsnetzwerk und insbesondere auf eine Vorrichtung und ein Verfahren zur individuellen Bereitstellung von verschlüsselten Inhalten über öffentliche Kommunikationsnetze unter Ausnutzung digitaler Rechtemanagement-Systeme.

Mit der Ermöglichung der individuellen Bereitstellung von Inhalten bzw. Content wie beispielsweise Videodaten (Filme) oder Audiodaten (Musik/Hörfunkbeiträge) über öffentliche Kommunikationsnetze, z.B. als Video-on-Demand (VoD) gibt es ein erhöhtes Schutzbedürfnis derartiger Inhalte bzw. Contents gegen das unerlaubte Erstellen von Kopien. Diesem Bedürfnis kommen heutige Systemarchitekturen zur Bereitstellung von beispielsweise VoD (Video-on-Demand) über paketvermittelnde Netze, wie beispielsweise IP-Netze (Internet Protokoll) mit jeweils eigenem digitalen Rechtemanagement-Verfahren (DRM, Digital Rights Management) nach. Damit wird sichergestellt, dass ein jeweiliger Inhalt, z.B. kopiergeschützt ist auf dem Weg von einem Video-Server zu einem Telekommunikationsendgerät, wie beispielsweise einer Set-Top-Box (STB) und beim Teilnehmer eine bestimmungsgemäße Verwendung findet.

Eine Nutzung des Inhalts durch den Teilnehmer wird durch Features der VoD-Lösung bestimmt und wird im Allgemeinen dabei eingeschränkt. Insbesondere wird der Inhalt als verschlüsselte Information bzw. als verschlüsselter Inhalt übertragen. Eine zentrale Koordinationsstelle, wie z.B. eine Total Management-Middleware (TM) stellt sicher, dass der Teilnehmer nur im Bezahlfalle Zugriff auf den Inhalt erhält, und zwar in der mit dem Inhaltsanbieter bzw. Contentprovider und dem Teilnehmer vereinbarten Art und Weise. Der Inhaltsanbieter bzw. Contentprovider vertraut hierbei den hinsichtlich Kopierschutz und Missbrauchsverhinderung zugesicherten Eigenschaften der jeweiligen bei einem Netzbetreiber im Einsatz befindlichen VoD-Lösung.

Digitale Rechteverwaltungs- und Kopierschutzmechanismen (DRM, Digital Rights Management), die mit Nachdruck insbesondere im Hinblick auf die Kontrolle des Kopierens und Wahrung zulässiger Nutzung von bzw. mittels optischen Datenträger, wie z.B HD-DVD (High Density Digital Video Disc), Blu-Ray-Disc, entwickelt werden, beschränken sich nicht nur auf die Definition, wie ein Inhalt auf einem dieser optischen Trägermedien gespeichert werden soll, und wie ein Abspielgerät den Inhalt davon auslesen soll bzw. ein Aufzeichnungsgerät (z.B. Brenner) den Inhalt schreiben soll, sondern sie behandeln auch gleich den Fall der Verbreitung des Inhalts über ein öffentliches Kommunikationsnetz, wie z.B. ein IP-Netzwerk mit, bei dem unter Anderem eine Inhalts-Weitergabe auch völlig ohne optische Speichermedien per Streaming oder Download ablaufen kann.

Das digitale Rechtemanagement AACS (Advanced Access Content System) setzt hierbei bereits einen weitreichenden Funktionsumfang fest. Dieser wird jedoch von herkömmlichen VoD-Lösungen nicht abgedeckt. Das digitale Rechtemanagement AACS ist beispielsweise ihn INTEL CORP. et al.: "AACS - Introduction and Common Cryptographic Elements" beschrieben.

So stellt der Inhaltsanbieter bzw. Contentprovider (z.B. Disney oder Time Warner) seine Filme derzeit in unverschlüsselter Form für Homeentertainmentlösungen für Video on Demand (VoD), wie z.B. Siemens HES (Home Entertainment Solution), zur Verfügung. Alternativ kann der Content auch verschlüsselt zur Verfügung gestellt sein, wobei die Schlüsselinformation zusätzlich vom Inhaltsanbieter bereitgestellt wird. In beiden Fällen ist der Inhalt auf der Schnittstelle zwischen Inhaltsanbieter und der Systeminfrastruktur des Netzbetreibers, z.B. dessen Inhalts-Verwaltungssystem (CMS, Content Management System) zur Einbringung von neuen Inhalten in die VoD-Lösung nicht gemäß der voranstehend genannten fortgeschrittenen Schutzmechanismen der digitalen Rechtemanagement-Standards gesichert. Die vorstehenden digitalen Rechtemanagement-Stan-dards besitzen insbesondere im Hinblick auf hochauflösende Inhalte (HD Content) Bedeutung.

Insbesondere kann der Inhaltsanbieter den Inhalt nicht auf einem gemäß dem digitalen Rechtemanagement-Standard für fortgeschrittenen Rechte- und Kopierschutz definierten optischen Medium bereitstellen. Hierbei kann neben dem standardgemäß verschlüsselten Film auch Metainformation über den bestimmungsgemäßen Gebrauch des Inhalts, Schlüsselinformation, Kopierschutzinformation, Information über zulässige Abspielgeräte enthalten sein, die in standardkonformer Weise von dem hinsichtlich des Standards als konform zu zertifizierenden Inhalts-Verwaltungssystem und VoD-Gesamtsystem zu bearbeiten wäre. In gleicher Weise ist es derzeit nicht möglich, den Inhalt mit äquivalentem Schutz unter Umgehung eines optischen Übertragungsmediums durch direkten Download über ein Telekommunikationsnetz in das Inhalts-Verwaltungssystem bzw. das VoD-Gesamtsystem einzubringen.

INTEL CORP. et al.: "Content Protection System Architecture" offenbart eine weitere DRM-Architektur ("CPSA"), welche eine Nutzung von geschützten Inhalten in Telekommunikationsnetzwerken ermöglicht. Auch die CPSA erlaubt keine Einbindung nicht-CPSA-konformer Endgeräte oder Funktionseinheiten.

Entsprechend gibt es keine Mechanismen, die hinsichtlich eines entsprechenden digitalen Rechtemanagement-Standards als unsicher erwiesene Abspiel- bzw. Aufzeichnungsfunktionen und Komponenten der VoD-Gesamtarchitektur standardkonform revozieren bzw. ausschließen, und damit im Hinblick auf ein digitales Rechtemänagement potenziell schädliche Wirkung bzw. reduzierte Schutzeigenschaften beseitigen können.

Aufgrund des Arguments eines vergleichbar hohen Schutzes und eines über die Systemgrenzen hinweg gleichartigen Schutzes von Inhalten und die Wahrung seines bestimmungsgemäßen Gebrauchs, ist davon auszugehen, dass die von den Geräten der Unterhaltungselektronik zukünftig adaptierten digitalen Rechtemanagement- und Kopierschutzmechanismen ebenfalls von den VoD-Lösungen zu unterstützen sein werden. Dies kann motiviert sein durch z.B. entsprechende Bedingungen der Inhalte-Lieferanten (Studios) vor Auslieferung der zu schützenden Inhalte an die Betreiber der (Home-Entertainment) Lösung.

Der Erfindung liegt daher die Aufgabe zugrunde, eine Vorrichtung und ein Verfahren zur gesicherten Verteilung von Inhalten in einem Telekommunikationsnetzwerk zu schaffen, welches verbesserte Schutzmechanismen aufweist im Hinblick auf die Wahrung der Rechte der jeweiligen Inhaltsanbieter.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 14 gelöst.

Hierbei verwaltet eine Bestands-Verwaltungseinheit Endgeräte mit zumindest einer Funktionseinheit auf der Grundlage von für einen verschlüsselten Inhalt gehörigen Nutzungsrechte-Metadaten, wobei eine Endgeräte-Ansteuereinheit die Endgeräte entsprechend ansteuert. Die Bestands-Verwaltungseinheit vergleicht hierbei die Nutzungsrechte-Metadaten mit einer Funktionseinheit-Bestandsliste, wobei die Endgeräte-Ansteuereinheit das Endgerät für einen jeweils verschlüsselten Inhalt selektiv ansteuert, wenn beim Vergleich eine für den Inhalt nicht freigegebene Funktionseinheit ermittelt wird. Die selektive Ansteuerung beinhaltet beispielsweise ein Sperren des Endgeräts und/oder der Funktionseinheit oder ein Ändern einer Movie- oder EPG-Liste. Auf diese Weise kann zuverlässig sichergestellt werden, dass die in einem Telekommunikationsnetzwerk vorhandenen Endgeräte für die Wiedergabe eines verschlüsselten Inhalts nur dann freigegeben werden, wenn sie ausschließlich unbedenkliche Funktionseinheiten enthalten und somit den Rechteschutz, insbesondere den Kopierschutz, nicht unterlaufen können.

Vorzugsweise kann eine Verrechnungsstelle zum Bereitstellen von zumindest einem Teil von Entschlüsselungs-Metadaten für den verschlüsselten Inhalt vorgesehen sein, wodurch eine zusätzliche Sicherung auch in Abhängigkeit von einer jeweiligen Vergebührung durchgeführt werden kann.

Ferner kann eine Rechte-Verwaltungseinheit zum Bereitstellen von zum verschlüsselten Inhalt gehörigen Metadaten, die zumindest einen restlichen Teil von Entschlüsselungs-Metadaten enthalten, und eine Inhalts-Bereitstellungseinheit zum Bereitstellen der zugehörigen verschlüsselten Inhalte vorgesehen sein, wodurch eine optimale Anpassung für ein Telekommunikationsnetzwerk gewährleistet ist. Die Inhaltsbereitstellungseinheit kann hierbei einen VoD-Server oder eine TV-Kopfstelle oder TV-Kopfstation darstellen.

Eine Weiterbildung ist es insbesondere, dass die InhaltsBereitstellungseinheit einen VoD-Server darstellt. Eine andere Weiterbildung ist es, dass die InhaltsBereitstellungseinheit eine TV-Kopfstelle darstellt.

Ferner kann eine Inhalts-Verwaltungseinheit mit einer Schnittstellen-Anpassungseinheit zum Anpassen eines ersten Datenformats des verschlüsselten Inhalts und zugehörigen Nutzungsrechte- und Entschlüsselungs-Metadaten an ein zweites Datenformat und eine Datenverteilungseinheit vorgesehen sein, die den verschlüsselten Inhalt und die zugehörigen Nutzungsrechte- und Entschlüsselungs-Metadaten im Telekommunikationsnetzwerk verteilt. Auf diese Weise kann an einer für den Inhaltsanbieter sicheren Stelle der Inhalt in das Telekommunikationsnetzwerk eingebracht werden, ohne dass hierbei ein Risiko von Manipulationen am Inhalt oder ein verminderter Schutz der Rechte der jeweiligen Inhaltsanbieter besteht.

Ferner kann eine Kauf-Verarbeitungseinheit zur Abwicklung einer Kauf-Verarbeitung für einen verschlüsselten Inhalt zwischen dem Endgerät und einem Inhalts-Anbieter oder eine von einem Inhaltsanbieter beauftragte Instanz vorgesehen sein, wodurch eine hochflexible und anbieterspezifische Abrechnung von Inhalten realisiert werden kann.

Die Kauf-Verarbeitungseinheit kann hierbei den zumindest einen Teil der Verschlüsselungs-Metadaten der Rechte-Verwaltungseinheit zuführen, die damit einen vollständigen Satz von Entschlüsselungs-Metadaten für das Endgerät bereitstellt.

Alternativ oder zusätzlich kann das Endgerät auch einen Metadaten-Mischer aufweisen, der aus dem unmittelbar erhaltenen zumindest einen Teil von Entschlüsselungs-Metadaten und einem unvollständigen Satz von Metadaten einen vollständigen Satz von Entschlüsselungs-Metadaten im Endgerät erzeugt.

Ferner kann das Endgerät eine dezentrale Bestands-Verwaltungseinheit zum Verwalten des Endgeräts aufweisen, wobei die dezentrale Bestands-Verwaltungseinheit eine FunktionseinheitBestandsliste mit Nutzungsrechte-Metadaten vergleicht, die von der Verrechnungsstelle zusätzlich bereitgestellt werden, wobei der Metadaten-Mischer eine nicht freigegebene Funktionseinheit des Endgeräts für einen jeweiligen verschlüsselten Inhalt selektiv ansteuert, wenn beim Vergleich eine für den Inhalt nicht freigegebene Funktionseinheit ermittelt wird.

Die Funktionseinheit kann z.B. ein digitales Rechtemanagement-konformes Wiedergabegerät darstellen, das den verschlüsselten Inhalt mit den Entschlüsselungs-Metadaten entschlüsselt. Zum Ausgeben des entschlüsselten Inhalts kann ferner eine Ausgabeeinheit vorgesehen sein, die mit dem Endgerät über eine verschlüsselte Schnittstelle verbunden ist.

Gemäß einer Weiterbildung ist die Vorrichtung mit einer Ausgabeeinheit zum Ausgeben des entschlüsselten Inhalts ausgestaltet, wobei die Ausgabeeinheit mit dem Endgerät über eine verschlüsselte Schnittstelle verbunden ist.

Vorzugsweise basiert die Vorrichtung auf dem AACS-Rechtemanagement-Standard und die Nutzungsrechte-Metadaten können eine Revozierungsliste zum Kennzeichnen von ausgeschlossenen Funktionseinheiten enthalten. Ferner können die gemäß digitalen Rechtemanagement verschlüsselten Inhalte sowie ihre zugehörigen Metadaten für eine Übertragung im Telekommunikationsnetzwerk zusätzlich verschlüsselt werden.

Eine Weiterbildung ist es, dass die Vorrichtung auf dem AACSRechtemanagement-Standard basiert.

Eine andere Weiterbildung ist es, dass die RechteVerwaltungseinheit auf mehreren Servern verteilt ist. Ebenso ist es eine Weiterbildung, dass die InhaltsBereitstellungseinheit auf mehreren Servern verteilt ist. Hinsichtlich des Verfahrens zur gesicherten Verteilung von Inhalten in einem Telekommunikationsnetzwerk werden zunächst verschlüsselte Inhalte und zugehörige Nutzungsrechte- und Entschlüsselungs-Metadaten verfügbar gemacht und in einem Telekommunikationsnetzwerk verteilt. Nach einer Auswertung der Nutzungsrechte-Metadaten wird ein jeweiliges Endgerät des Telekommunikationsnetzwerks in Abhängigkeit von den ausgewerteten Nutzungsrechte-Metadaten und seinen enthaltenen Funktionseinheiten entsprechend angesteuert. Auf diese Weise kann bei Vorliegen von den Rechteschutz des Inhaltsanbieters, insbesondere den Kopierschutz, gefährdenden Funktionseinheiten eine Deaktivierung, vorzugsweise für die selektive Wiedergabe eines gemäß den Vorgaben des Rechteschutzes eines Inhaltsanbieters nicht ausreichend geschützten Inhalts, oder ein Aktualisierung von Endgeräten realisiert werden.

Eine Weiterbildung ist es, dass die verschlüsselten Inhalte von einem VoD-Server ausgegeben werden.

Eine andere Weiterbildung, ist es, dass die verschlüsselten Inhalte von einer TV-Kopfstelle ausgegeben werden.

Auch ist es eine Weiterbildung, dass die Auswertung der Nutzungsrechte-Metadaten in einem "Total Management Middleware-Server" (TM) und/oder im Endgerät durchgeführt wird.

Eine Ausgestaltung ist es, dass das Entschlüsseln in einer rechteverwaltungskonformen Wiedergabeeinheit durchgeführt wird.

Eine weitere Ausführungsform ist es, dass beim Ausgeben das Endgerät den entschlüsselten Inhalt über eine verschlüsselte Schnittstelle an eine Ausgabeeinheit ausgibt.

Eine andere Ausgestaltung ist es, dass das Verfahren auf dem AACS-Rechtemanagement-Standard basiert.

Eine weitere Weiterbildung ist es, dass die NutzungsrechteMetadaten eine Revozierungsliste zum Ausschließen von Funktionseinheiten des Endgeräts aufweisen.

Ebenso ist es eine Ausführungsform, dass vor dem Verteilen der Inhalte und Metadaten eine zusätzliche Verschlüsselung durchgeführt wird.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
- Figur 1: ein vereinfachtes Blockschaltbild zur Veranschaulichung einer Vorrichtung zur gesicherten Verteilung von Inhalten in einem Telekommunikationsnetzwerk;
- Figur 2: ein vereinfachtes Blockschaltbild zur Veranschaulichung einer VoD-Lösung gemäß einem ersten Ausführungsbeispiel;
- Figur 3: ein vereinfachtes Blockschaltbild zur Veranschaulichung einer VoD-Lösung gemäß einem zweiten Ausführungsbeispiel;
- Figur 4: ein vereinfachtes Blockschaltbild zur Veranschaulichung einer VoD-Lösung gemäß einem dritten Ausführungsbeispiel;
- Figur 5: ein vereinfachtes Blockschaltbild zur Veranschaulichung einer VoD-Lösung gemäß einem vierten Ausführungsbeispiel;
- Figur 6: ein vereinfachtes Blockschaltbild zur Veranschaulichung einer TV-Kopfstellen-Lösung gemäß einem ersten Ausführungsbeispiel;
- Figur 7: ein vereinfachtes Blockschaltbild zur Veranschaulichung einer TV-Kopfstellen-Lösung gemäß einem zweiten Ausführungsbeispiel; und
- Figur 8: ein vereinfachtes Flussdiagramm zur Veranschaulichung wesentlicher Verfahrensschritte des erfindungsgemäßen Verfahrens.

Die Erfindung wird nachfolgend beispielhaft erläutert anhand des AACS-Standards (Advanced Access Content Systems) als digitales Rechtemanagement (DRM, Digital Rights Management) in Verbindung mit einer SPDC-Architektur (Self Protecting Digital Content) als DRM-Architektur zum Schutze von Inhalten, wie sie vom AACS verwendet wird.

Das Advanced Access Content System (AACS) ist ein digitales Rechtemanagement, welches insbesondere für bespielbare und vorbespielte optische Medien bzw. Datenträger zum Einsatz kommt.

Das AACS, welches auch für den Kopierschutz verwendet wird, wurde von den Unternehmen Intel, Microsoft, Panasonic, Sony, Toshiba, Walt Disney und Warner Brothers spezifiziert.

Die für die Lizenzvergabe von AACS zuständige Organisation heißt "Advanced Access Content System License Administrator" (AACS LA). Gemäß AACS-Standard erfolgt eine Verschlüsselung aller Inhalte mit AES-128-Bit-Verschlüsselung. Hierbei gibt es ein Lizenzschlüsselmanagement, d.h. es können z.B. auch geschützte Kopien mit begrenzter Abspielfähigkeit (zeitlich oder auf bestimmten Laufwerken) erzeugt werden. Ferner besteht die Möglichkeit zur Sperrung von Lizenzschlüsseln. Eine Laufwerkverifizierung erfolgt durch einen Hardwareschlüssel. Eine Kommunikation aller Komponenten untereinander geschieht verschlüsselt. Die Anbindung an ein Telekommunikationsnetzwerk und insbesondere an das Internet ist möglich. Die Verknüpfung mit Disk ID (Identification) erfolgt mit Lizenzschüssel. Ferner ist eine Freischaltung und Download/Streaming der Inhalte per Internet vorgesehen.

Ziel von AACS ist es, hochauflösende Videoinhalte nicht ohne Verschlüsselung und ohne digitales Rechtemanagement öffentlich zugänglich zu machen. Dies geht über den bisherigen Kopierschutz z.B. einer DVD (Digital Video Disc) hinaus und bedeutet ein komplett geschlossenes digitales Rechtemanagement. Hierbei betrifft AACS nicht nur vorbespielte Medien und Online-Inhalte von z.B. Medienservern, sondern soll sich auch auf hochauflösende Aufnahmen aus z.B. Fernsehübertragungen (TV, Television) erstrecken.

Dadurch ergibt sich ein hoher Schutz des Inhalts durch ein umfassendes digitales Rechtemanagement, das von einer Vielzahl von namhaften Firmen unterstützt wird. Es ermöglicht in diesem Zusammenhang eine automatische Außerbetriebnahme von korrumpierbaren Geräten, wodurch sich eine erhöhte Motivation der Endbenutzer ergibt, ausschließlich vertrauenswürdige Quellen für die gewünschten Inhalte zu benutzen. Ferner eignet es sich für HD-Inhalte (High Density) und zur verschlüsselten Übertragung der Inhalte über diverse Schnittstellen.

Das "Self Protection Digital Content" (SPDC) ist eine digitale Rechtemanagement-Architektur zum Schutz von Inhalten, wie z.B. Videodaten oder Audiodaten, die vom Advanced Access Content System (AACS) verwendet werden.

SPDC ermöglicht dem Lieferanten des Inhalts, Schutzsysteme "dynamisch" zu ändern, falls ein vorhandenes Schutzsystem für den Angriff gefährdet ist. SPDC führt Codes von geschütztem Inhalt auf dem Abspielgerät aus und addiert so Funktionalität, um das System "dynamisch" zu machen. Im Vergleich zu den "statischen" Systemen, in denen das System und die Schlüssel für Verschlüsselung und Entschlüsselung nicht geändert werden, ergibt sich dadurch eine Verbesserung. Bei dem statischen System kann mit einem "geknackten" Schlüssel jeder Inhalt entschlüsselt werden, der mit diesem Verschlüsselungs-system freigegeben wurde. "Dynamische" Schutz-Systeme dagegen gewährleisten, dass zukünftig freigegebener Inhalt immun wird gegen den Angriff mit einer vorhandenen Methode der Schutz-Umgehung.

Wenn bezüglich einer Wiedergabe-Methode, die für bereits freigegebenen Inhalt verwendet wird, Schwächen deutlich werden (entweder durch Review oder wenn es möglich war, den Inhalt unbefugt zu nutzen), wird die Methode durch Integration von Code in den Inhalt für zukünftige Freigaben geändert. Für den potenziellen Angreifer bedeutet das einen Neustart der Attacken.

Wenn ein bestimmtes Modell von Abspielgeräten für den Missbrauch gefährdet ist, so können spezifische Code-Anteile des Modells aktiviert werden, um bei einem Abspielgerät dieses Modells verifizieren zu können, ob dieses Gerät bereits missbraucht wurde. Falls ein Missbrauch stattgefunden hat, kann das Abspielgerät eindeutig gekennzeichnet ("fingerprinted") und diese Information später verwendet werden.

Code-Anteile, die in den (Nutz-)Inhalt integriert wurden, können Informationen zur Identifizierung des Abspielgeräts hinzufügen. Die am Ausgang zur Verfügung stehenden Informationen können dazu verwendet werden, das Abspielgerät ausfindig zu machen. Diese Informationen können auch das eindeutige Kennzeichen ("fingerprint") des Abspielgeräts beinhalten.

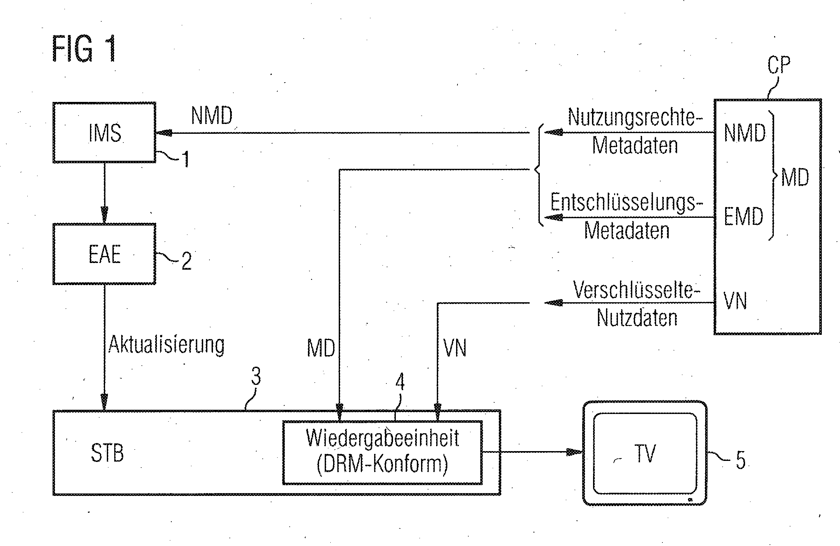

Figur 1 zeigt eine vereinfachte Blockdarstellung zur Veranschaulichung einer Vorrichtung zur gesicherten Verteilung von Inhalten in einem Telekommunikationsnetzwerk gemäß der vorliegenden Erfindung, die beispielsweise auf den vorstehend genannten AACS- und SPDC-Standards beruht.

Gemäß der Figur 1 wird von einem Inhaltsanbieter bzw. Content Provider CP ein Inhalt in Form eines verschlüsselten Inhalts bzw. verschlüsselter Nutzdaten VN, zugehörigen Entschlüsselungs-Metadaten EMD und zugehörigen Nutzungsrechte-Metadaten NMD ausgegeben. Die Nutzungsrechte-Metadaten NMD und die Entschlüsselungs-Metadaten ergeben gemeinsam die zum verschlüsselten Inhalt VN gehörigen Metadaten MD. Während die verschlüsselten Nutzdaten VN den eigentlichen Inhalt wie z.B. Videodaten oder Audiodaten aufweisen, enthalten die Entschlüsselungs-Metadaten den für die Entschlüsselung zugehörigen Schlüssel und die Nutzungsrechte-Metadaten NMD, die in einem digitalen Rechtemanagement vergebenen Nutzungsrechte, wie beispielsweise eine Zeitdauer der Verfügbarkeit des Inhalts, eine Erlaubnis für Trickplay-Modes, eine zeitliche Beschränkung der Ausgabe nach einem Kauf, eine GenreInfo/Rating-Info/Summary/Binding-Info sowie eine Zulässigkeitsinfo für Push Vod (also das Laden des Inhalts auf ein Endgerät, z.B. eine Set Top Box, im Vorgriff auf eine möglicherweise erfolgende spätere Nutzung durch den Teilnehmer) usw. In diesen Nutzungsrechte-Metadaten können erfindungsgemäß insbesondere auch Nutzungsbeschränkungen für einen jeweiligen Netzbetreiber/Dienstanbieter enthalten sein, die beispielsweise die Verteilung des Inhalts auf eine Anzahl von Endgeräte beschränkt (z.B. 100 000 Endgeräte). Ferner können derartige Nutzungsbeschränkungen die geografischen Gegebenheiten (z.B. nur in Deutschland erlaubt), eine Anzahl der zur Verfügung stehenden Video-Server (z.B. 5 Sites), eine zentrale Replikation (z.B. TV von gestern erlaubt) usw. berücksichtigen. Die vorstehend genannten Metadaten können selbst in verschlüsselter Form vorliegen, wobei zur Entschlüsselung jeweils andere Teile der Metadaten notwendig sein können.

Gemäß Figur 1 werden nunmehr der verschlüsselte Inhalt bzw. die verschlüsselten Nutzdaten VN einem Endgerät 3 und insbesondere dessen Rechtemanagement-konformer Wiedergabeeinheit 4 zugeführt. Das Endgerät 3 kann beispielsweise ein in das Telekommunlikationsnetzwerk eingebundenes Telekommunikationsendgerät darstellen, wie beispielsweise eine Set-Top-Box STB. Die Wiedergabeeinheit 4 ist beispielsweise ein sogenannter "DRM-konformer Player", der mit dem im Netzwerk realisierten digitalen Rechtemanagement, wie beispielsweise dem AACS-Standard, konform ist. Der Wiedergabeeinheit 4 werden ferner zumindest die Entschlüsselungs-Metadaten EMD zum Entschlüsseln des verschlüsselten Inhalts VN in der Wiedergabeeinheit 4 zugeführt. Üblicherweise werden jedoch nicht nur die Entschlüsselungs-Metadaten EMD, sondern die zum verschlüsselten Inhalt VN zugehörigen gesamten Metadaten MD einschließlich der Nutzungsrechte-Metadaten NMD zugeführt. Dies liegt daran, dass i.a. auch die Nutzungsrechte-Metadaten Einfluss auf die Ableitung der Schlüsselinformation haben können (s. Usage Rules des AACS Standards). Das bedeutet, dass die Trennung der Metadaten in Nutzungsrechte-Metadaten und Entschlüsselungs-Metadaten so zu verstehen ist, dass die Nutzungsrechte-Metadaten Informationen enthalten, die hinsichtlich des Rechteschutzes Relevanz besitzen. Alle weiteren Metadaten, die in diesem Sinne nicht Nutzungsrechte-Metadaten sind, werden als Entschlüsselungs-Metadaten bezeichnet. Die alleinige Kenntnis der Entschlüsselungs-Metadaten und des verschlüsselten Inhalts befähigt i.a. nicht zur Entschlüsselung des Inhalts.

Zumindest die Nutzungsrechte-Metadaten NMD werden gemäß Figur 1 auch einer Bestands-Verwaltungseinheit 1 zum Verwalten von Endgeräten 3 im Telekommunikationsnetzwerk zugeführt, wobei die Endgeräte 3 zumindest eine Funktionseinheit, wie z.B. die Wiedergabeeinheit 4 enthalten. Die Bestands-Verwaltungseinheit 1 ist jeweils in Kenntnis von allen im Telekommunikationsnetzwerk befindlichen Endgeräten 3 und ihren jeweiligen Funktionseinheiten 4 und kann demzufolge diese Endgeräte 3 auf der Grundlage der zum verschlüsselten Inhalt VN zugehörigen Nutzungsrechte-Metadaten NMD verwalten.

Ferner ist gemäß Figur 1 eine Endgeräte-Ansteuereinheit 2 zum Ansteuern der Endgeräte 3 vorgesehen, wobei die Bestands-Verwaltungseinheit die Nutzungsrechte-Metadaten NMD mit einer Funktionseinheit-Bestandsliste vergleicht und die EndgeräteAnsteuereinheit 2 das Endgerät 3 für einen jeweils verschlüsselten Inhalt VN selektiv ansteuert, wenn beim Vergleich eine für den Inhalt nicht freigegebene Funktionseinheit 4 ermittelt wird. Genauer gesagt kann demzufolge eine beispielsweise in den Nutzungsrechte-Metadaten NMD enthaltene Revozierungsliste bzw. Ausschlussliste mit einer Funktionseinheit-Bestandsliste, die alle im Netzwerk befindlichen Funktionseinheiten entsprechend ihrer Endgeräte enthält, verglichen werden, wobei ein Endgerät für einen bestimmten Inhalt gesperrt bzw. deaktiviert werden kann, wenn es zumindest eine nicht für diesen Inhalt freigegebene Funktionseinheit 4 enthält. Das selektive Ansteuern kann hierbei eine tatsächliche Deaktivierung bzw. Sperrung des Endgeräts 3 oder einer Funktionseinheit 4 beinhalten, es kann jedoch auch nur eine Modifikation einer Auswahl-Anzeige in beispielsweise einer Movie-Liste oder EPG-Liste (Electronic Program Guide) des Endgeräts 3 bedeuten. Letzteres kann beispielsweise zur Folge haben, dass ein Teilnehmer an dem Endgerät 3 eine gemäß der vorstehenden Beschreibung kritischen Inhalt nicht zur Auswahl angeboten bekommt.

Sofern das Endgerät 3 für den verschlüsselten Inhalt VN nicht gesperrt wurde bzw. eine entsprechende Auswahlmöglichkeit des Inhalts besteht, erfolgt die Entschlüsselung des verschlüsselten Inhalts bzw. der verschlüsselten Nutzdaten VN unter Verwendung der Entschlüsselungs-Metadaten EMD in der Wiedergabeeinheit 4, wobei der entschlüsselte Inhalt an eine Ausgabeeinheit 5, wie beispielsweise ein Fernsehgerät (TV, Television) erfolgt.

Beispielsweise kann die Ausgabeeinheit 5 mit dem Endgerät 3 über eine verschlüsselte Schnittstelle, wie beispielsweise HDCP (High-bandwidth Digital Content Protection) verbunden sein. HDCP ist ein Verschlüsselungssystem, das für die geschützte Übertragung von Audio- und Videodaten vorgesehen ist. Es kann hierbei in Zusammenhang mit dem HDTV-Standard (High Definition Television) oder auch bei Blu-Ray bzw. HD-DVD (High Density Digital Video Disc) zum Einsatz kommen.

Auf diese Weise kann auch in einem Telekommunikationsnetzwerk für jeweilige Inhaltsanbieter bzw. Content Provider CP zuverlässig sichergestellt werden, dass ihre verschlüsselten Inhalte zu keiner Zeit vermeidbar unverschlüsselt vorliegen oder die Gefahr eines unautorisierten Zugriffs besteht. Jedes im Telekommunikationsnetzwerk befindliche Endgerät kann hierbei in Abhängigkeit von Nutzungsrechte-Metadaten selektiv angesteuert werden.

Neben der vorstehend beschriebenen Sperrung des Endgeräts oder eingeschränkten Auswahlmöglichkeit von angebotenen Inhalten kann als selektive Ansteuerung auch eine Aktualisierung des Telekommunikationsendgeräts durch die Endgeräte-Ansteuereinheit 2 erfolgen. Eine derartige Aktualisierung beinhaltet beispielsweise einen Software-Update, der aus einer nicht-konformen Wiedergabeeinheit eine für das digitale Rechtemanagement nunmehr konforme Wiedergabeeinheit erzeugt, wodurch z.B. bereits existierende Endgeräte nach einem Upgrade weiterverwendet werden können.

### VoD-Szenario

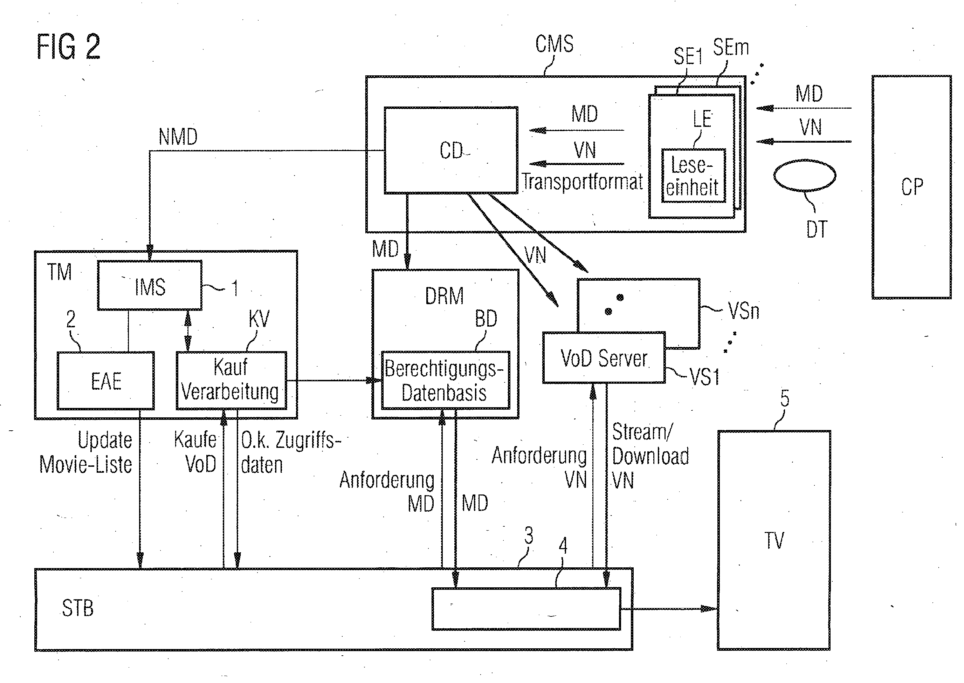

Figur 2 zeigt eine vereinfachte Blockdarstellung für eine VoD-Lösung (Video on Demand) gemäß einem ersten Ausführungsbeispiel, wobei gleiche Bezugszeichen gleiche Elemente wie in Figur 1 bezeichnen, weshalb nachfolgend auf eine wiederholte Beschreibung verzichtet wird.

Gemäß Figur 2 befindet sich die Bestands-Verwaltungseinheit 1 (IMS, Inventory Management System) sowie die Endgeräte-Ansteuereinheit 2 in einer zentralen Koordinationsstelle, wie beispielsweise einem sogenannten "Total Management-Middleware-Server" TM. In dieser zentralen Koordinationsstelle TM werden ohnehin alle im Netzwerk üblicherweise vorhandenen Telekommunikationsendgeräte 3 und insbesondere entsprechende Set-Top-Boxen STB zentral verwaltet.

Gemäß Figur 2 weist die erfindungsgemäße VoD-Lösung eine Inhalts-Verwaltungseinheit CMS (Content Management System) auf, die zumindest eine Schnittstellen-Anpassungseinheit (SE1-SEm) und eine Datenverteilungseinheit CD (Content Distribution) aufweist. Die Schnittstellen-Anpassungseinheit SE1 bis SEm realisiert beispielsweise über einen sogenannten Staging Area Server (SAS) eine gemäß dem digitalen Rechtemanagement konforme Schnittstelle. Über diese stellt der Inhaltsanbieter bzw. Content Provider CP einen Inhalt bereit samt der bezüglich des Standards und der Schnittstelle definierten Metadaten MD. Insbesondere kann die Schnittstellen-Anpassungseinheit zum Anpassen eines ersten Datenformats des verschlüsselten Inhalts VN und der zugehörigen Nutzungsrechte- und Entschlüsselungs-Metadaten EMD und NMD an ein zweites Datenformat ein Laufwerk für HD-DVD (High Density Digital Video Disc) oder Blu-Ray Discs haben. Ferner kann eine IP-Schnittstelle vorgesehen sein (Internet Protocol), über die der Download des verschlüsselten Inhalts (VN) von einem InhaltsServer des Inhaltsanbieters CP und die Zustellung der zugehörigen Metadaten erfolgen kann. Im letzteren Falle tritt die Schnittstellen-Anpassungseinheit SE1-SEm und insbesondere deren Leseeinheit LE als Client in einem Downloadszenario des digitalen Rechtemanagement-Standards auf.

Im einfachsten Falle stellt der Inhaltsanbieter CP eine dem digitalen Rechtemanagement-Standard gemäße Disc bzw. einen entsprechenden Datenträger DT, wie z.B. HD DVD oder Blu-Ray, zur Verfügung, auf dem sich auch die gemäß dem digitalen Rechtemanagement-Standard aufbereiteten verschlüsselten Nutzdaten VN, wie z.B. ein Film oder Musik befinden. Obwohl eine Verschlüsselung durch ein in der VoD-Lösung zusätzlich vorhandenes digitales Rechtemanagement-System prinzipiell entfallen kann, können die verschlüsselten Inhalte VN und die zugehörigen Metadaten MD für die Übertragung im Telekommunikationsnetzwerk zusätzlich verschlüsselt werden. Auf diese Weise ergibt sich eine zusätzliche Sicherheit für das Gesamtsystem.

Im Falle des AACS-Standards können die Varianten eines "prerecorded" und eines "recordable medium" auftreten, welche sich im Hinblick auf die mitgegebenen Metadaten MD unterscheiden.

Im Falle des "recordable medium" des AACS-Standards sind die Metadaten MD beispielsweise Media Key Block (MKB), Media ID (Identification), Mac Value, Binding Nonce, verschlüsselter Key sowie Usage Rule, die den zur Entschlüsselung erforderlichen Titel-Schlüssel mitbestimmen. Dieser erlaubt zugleich eine Plausibilitätskontrolle von Media ID und Mac, was über die Zulässigkeit der Entschlüsselung entscheidet.

Im Falle des "pre-recorded mediums" des AACS-Standards sind die Metadaten MD zum einen Content Hash, Content-Certificate, Content Revocation List (CRL) und zum anderen Media Key Block (MKB), Key Conversion Data (KCD), Sequence Key Block (SKB), Volume ID, verschlüsselte Keys sowie Usage Rules. Unter Benutzung der dem AACS-konformen Abspielgerät eigenen öffentlichen Schlüssel, kann die Unversehrtheit des Datenträgers bzw. Mediums DT und die Konformität seines Inhalts zum digitalen Rechtemanagement-Standard AACS festgestellt werden. Unter Zuhilfenahme der dem AACS-konformen Abspielgerät eigenen Informationen über Device Keys und Sequence Keys kann dieses aus MKB, KCD und SKB, Volume ID und verschlüsselten Keys den zur Entschlüsselung erforderlichen Titel-Schlüssel bestimmen.

In der Schnittstellen-Anpassungseinheit bzw. dem Staging Area Server (SAS) ist für den Fall der physikalischen Bereitstellung des Inhalts auf einem Datenträger DT eine Leseeinheit (inverse player) LE vorgesehen, die invers zur der Funktionalität des digitalen Rechtemanagement-konformen Wiedergabegeräts 4 nicht den entschlüsselten Inhalt ausgibt, sondern den verschlüsselten Inhalt und die mit ihm auf dem üblicherweise optischen Datenträger DT zum Zwecke der Entschlüsselung unter den Gesichtspunkten der Nutzungsrechte bereitgestellten Metadaten MD.

Dem voraus kann eine Prüfung der Zulässigkeit des Inhalts (VN) durch die Funktionen des inversen Players bzw. der Leseeinheit LE gehen. Wird hierbei festgestellt, dass der Inhalt des Datenträgers DT gemäß dem verwendeten digitalen Rechtemanagement-Standard, wie z.B. AACS, inplausibel ist, so erfolgt eine entsprechende Ausgabe an den Bediener und eine Zurückweisung des Inhalts.

Das durch die Schnittstellen-Anpassungseinheit erzeugte zweite Datenformat ist beispielsweise ein Transportformat (z.B. MPEG-2 TS), welches innerhalb des Telekommunikationsnetzwerks verwendet werden kann. Zur Erhöhung des Schutzes können die Container des Transportstroms innerhalb dieses Transportformats optional individuell verschlüsselt werden. Hierbei wird beispielsweise ein spezifischer Container-Schlüssel mit dem aus den Metadaten MD gebildeten Schlüssel für den verschlüsselten Inhalt VN verschlüsselt und in dieser Form dem Transport-Container beigegeben. Die entsprechende Aufbereitung des Transportstroms erfolgt üblicherweise im Staging Area Server (SAS) bzw. der Schnittstellen-Anpassungseinheit SE1 bis SEm, die auch auf mehrere Server verteilt sein kann.

Die Schnittstellen-Anpassungseinheit bzw. der Staging Area Server (SAS) sorgt ferner für den Download des gemäß digitalem Rechtemanagement-Standard verschlüsselten und im Transportformat vorliegenden Inhalts auf i.a. mehrere Inhalt-Bereitstellungseinheiten, welche vorzugsweise VoD-Server (Video on Demand) darstellen. Gemäß Figur 2 kann die Verteilung des Inhalts und insbesondere die Verteilung der verschlüsselten Nutzdaten VN und der Metadaten MD auch durch eine in der Inhalt-Verwaltungseinheit CMS vorhandene Datenverteilungseinheit CD durchgeführt werden, wodurch sich eine mittelbare Verteilung ergibt.

Die Metadaten MD werden vorzugsweise in Summe bzw. als vollständiger Satz separat auf einen Server geladen, der vorzugsweise eine Rechte-Verwaltungseinheit DRM mit einer Berechtigungsdatenbasis BD aufweist. Dies kann wiederum gemäß Figur 2 mittelbar über die Datenverteilungseinheit CD der Inhalt-Verwaltungseinheit CMS durchgeführt werden, wobei grundsätzlich auch eine unmittelbare Verteilung von der Schnittstellen-Anpassungseinheit bzw. dem Staging Area Server (SAS) möglich ist.

Zumindest ein Teil der Metadaten MD, wie z.B. die Daten, die zur Aktualisierung der dem Teilnehmer visualisierten Movie-Liste notwendigen Informationen enthalten, können von der Datenverteilungseinheit CD mittelbar an die zentrale Koordinationsstelle TM und der darin befindlichen Bestands-Verwaltungseinheit 1 zugeführt werden. Grundsätzlich kann dies auch unmittelbar von der Schnittstellen-Anpassungseinheit SE1 bis SEm durch Herunterladen realisiert werden. Obwohl vorzugsweise nur die Nutzungsrechte-Metadaten NMD an die BestandsVerwaltungseinheit 1 geladen werden, können selbstverständlich auch alle Metadaten MD dieser Einheit zur Verfügung gestellt werden, wobei jedoch nur die für sie relevanten Nutzungsrechte-Metadaten NMD weiterverarbeitet werden.

Da ein gemäß digitalem Rechtemanagement-Standard, wie z.B. AACS eingeführtes Nutzungsrecht-Metadatum NMD zur Beeinträchtigung oder Abschaltung von Funktionen der VoD-Lösung führen kann, werden derartige Nutzungsrechte-Metadaten (NMD) und insbesondere die Revozierungsliste des MKB des AACS der Bestands-Verwaltungseinheit 1 bekanntgegeben und sind somit in dem Teil der an der zentralen Koordinationsstelle TM weitergegebenen Metadaten MD enthalten. Die in der zentralen Koordinationsstelle TM enthaltene Bestands-Verwaltungseinheit 1 umfasst eine Funktionseinheit-Bestandsliste aller relevanten Endgeräte, die dem digitalen Rechtemanagement-Standard entsprechen. Erfindungsgemäß werden nunmehr die NutzungsrechteMetadaten NMD zu einem verschlüsselten Inhalt gegen die Funktionseinheit-Bestandsliste der Bestands-Verwaltungseinheit 1 bzw. des Inventory Management Systems plausibilisiert. Wird hierbei festgestellt, dass ein Endgerät 3 erstmalig revozierte Funktionseinheiten bzw. Geräte enthält, so kann eine Meldung an den Bediener zum Aktualisieren/Retrofit des Endgeräts ausgegeben werden, um anschließend eine Aktualisierung bzw. ein Upgrade/Retrofit des Endgeräts durch die EndgeräteAnsteuereinheit 2 zu ermöglichen.

Optional kann gemäß Figur 2 der verschlüsselte Inhalt bzw. Film nicht in der Movie-Liste aufgenommen werden, was jedoch nach einem erfolgten Upgrade bzw. einer durchgeführten Aktualisierung wieder ermöglicht werden kann. Hiermit kann die potenzielle Beeinträchtigung der Funktion der Teilnehmereinrichtung ausgeschlossen werden. Alternativ kann der verschlüsselte Inhalt auch in die Movie-Liste aufgenommen werden, und beim Abruf des Films die Verträglichkeit der Metadaten des Films mit den Funktionseinheiten des Endgeräts 3 verifiziert werden. Wählt ein Teilnehmer mit einem Endgerät, wie beispielsweise einer Set-Top-Box STB, die ein revoziertes Gerät bzw. eine ausgeschlossene Funktionseinheit enthält, nun das Video bzw. den Film aus, das seine Funktion für die Ausgabe weiterer Videos bzw. Filme potenziell schädigen würde, so kann dies unter Ausgabe eines geeigneten Hinweises ("Set-Top-Box muss zur Ausgabe dieses Films ein Upgrade erfahren") an den Benutzer vermieden werden. Ferner kann eine Deaktivierung bzw. Sperrung des Endgeräts 3 durch die Endgeräte-Ansteuereinheit 2 erfolgen, wenn weder ein Upgrade möglich oder gewünscht ist, und gleichwohl eine Funktionseinheit nicht freigegeben ist.

Enthalten demzufolge die mit dem Datenträger DT erhaltenen Metadaten MD eine Inhalts-Revozierungsliste, so kann auch dies durch die Inhalts-Verwaltungseinheit CMS gegen die hinterlegten Inhalts-Items geprüft und die Sperrung eines revozierten Inhalts durch die Inhalts-Verwaltungseinheit über die Bestands-Verwaltungseinheit 1 und die Endgeräte-Ansteuereinheit 2 vorgenommen werden. Durch Information der Koordinationsstelle TM kann eine Löschung des revozierten Inhalts beispielsweise aus der Movie-Liste sowie eine Ausgabe eines entsprechenden Hinweises an den Bediener erfolgen.

Ferner kann eine Kauf-Verarbeitungseinheit KV in der zentralen Koordinierungsstelle TM vorgesehen sein, die eine Kauf-Verarbeitung für einen verschlüsselten Inhalt (VN) zwischen dem Teilnehmer des Endgeräts 3 und einem Inhalt-Anbieter bzw. Content Provider CP abwickelt. Wird ein verschlüsselter Inhalt VN, wie beispielsweise ein Video, das über die Schnittstellen-Anpassungseinheit in die VoD-Lösung eingebracht wurde, von einem Teilnehmer gekauft, so erfolgt nach Abwicklung des Bezahlvorgangs.in der Kauf-Verarbeitungseinheit KV die Ausgabe des verschlüsselten Inhalts (VN) im Transportformat an das Endgerät bzw. die Set-Top-Box STB des Teilnehmers. Die verschlüsselten Inhalte werden hierbei von den als InhaltsBereitstellungseinheit dienenden VoD-Servern VS1 bis VSn abgegeben (Stream/Download).

Das Endgerät 3 verfügt über eine Wiedergabeeinheit 4, die konform ist mit dem digitalen Rechtemanagement, wobei die erhaltenen Daten wegen der vorausgehenden Bestands-Überprüfung (Inventory Check) ohne Risiko hinsichtlich Funktionsverlust entschlüsselt und zur Ausgabe über das geeignete Interface zur Ausgabeeinheit 5 die entschlüsselten Daten bereitgestellt werden können. Die Ausgabeeinheit 5, wie beispielsweise ein Fernsehgerät, ist hierbei gemäß den Erfordernissen des digitalen Rechtemanagements angebunden, wie beispielsweise einer HDCP-Schnittstelle (High-bandwidth Digital Content Protection).

Die Funktionseinheit bzw. Wiedergabeeinheit 4 des Endgeräts 3 besitzt hierbei vorzugsweise keine Schnittstelle zum Abspielen eines digitalen Rechtemanagement-konformen Datenträgers, wobei sie jedoch dennoch in der Lage ist, die für diesen Datenträger DT vorgesehenen Metadaten MD zu verarbeiten. Die Wiedergabeeinheit 4 stellt demzufolge vorzugsweise ein Abspielgerät gemäß digitalem Rechtemanagement-Standard dar, welches keine reale Schnittstelle für einen entsprechenden Datenträger DT bzw. ein entsprechendes physikalisches Medium aufweist.

Optional können sämtliche den Inhalt betreffenden Metadaten MD in die Metadaten des digitalen Rechtemanagement-Standards eingebracht werden, wie z.B. in Form von Usage Rules, die beispielsweise eine Zeitdauer der Verfügbarkeit des Inhalts, eine Erlaubnis für Trickplay-Modes, eine zeitliche Beschränkung der Ausgabe nach einem Kauf, eine Genre Info, Rating Info, Summary, Binding Info, eine Push VoD-Zulässigkeit usw. aufweisen. In diesen Usage Rules können insbesondere auch Nutzungsbeschränkungen für den Netzbetreiber oder Dienstanbieter enthalten sein, wobei eine Inhaltsverteilung hinsichtlich einer Anzahl von Endgeräten, einer geografischen Lage, einer Anzahl von Video-Servern, einer zentralen Replikation usw. beschränkbar ist.

Auf diese Weise erhält man eine VoD-Lösung, bei der nur ein einziges Mal, nämlich im Endgerät 3 eine komplette Entschlüsselung vorgenommen wird. Das Endgerät 3 weist hierbei als Funktionseinheit eine Wiedergabeeinheit 4 ohne physikalische Datenträgerschnittstelle auf, die konform zum digitalen Rechtemanagement-Standard ist. Eingangsseitig befindet sich eine Leseeinheit bzw. ein inverses Abspielgerät LE zur Trennung von Metadaten MD und verschlüsselten Inhalt VN. Zur Durchführung einer Unschädlichkeits-Überprüfung des verschlüsselten Inhalts ist eine Bestands-Verwaltungseinheit 1 vorzugweise in der zentralen Koordinationsstelle TM vorgesehen, wobei eine Endgeräte-Ansteuereinheit 2 das Endgerät 3 in Abhängigkeit von Nutzungsrechte-Metadaten und einer FunktionseinheitBestandsliste ansteuert, wodurch Upgrades, eine Aktualisierung von Movie-Listen, ein Sperren des Endgeräts und/oder von Funktionseinheiten ermöglicht wird.

Ferner ist dadurch eine Behandlung von Inhalts-Revozierungen und/oder eine Behandlung von spezifischen User Rules, wie sie aus bestehenden Netzwerk-Lösungen bereits vorhanden sein können, möglich. Ein jeweiliger Netzbetreiber ist somit nur für die funktionierende Infrastruktur zuständig.

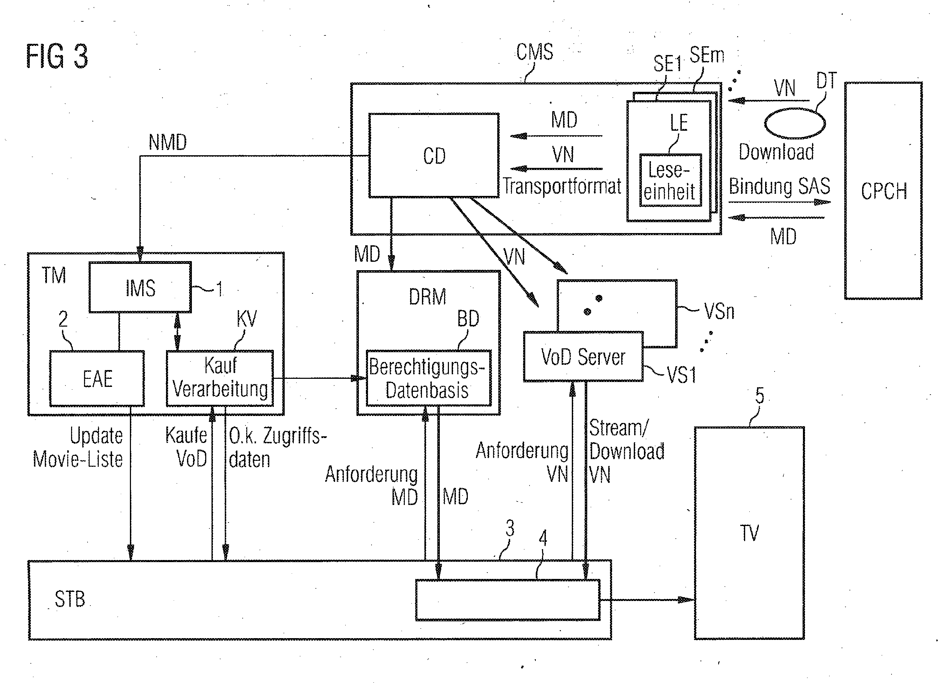

Figur 3 zeigt eine vereinfachte Blockdarstellung zur Veranschaulichung einer VoD-Lösung gemäß einem zweiten Ausführungsbeispiel, wobei gleiche Bezugszeichen gleiche Elemente wie in Figuren 1 und 2 bezeichnen, weshalb auf eine wiederholte Beschreibung nachfolgend verzichtet wird.

Gemäß Figur 3 kann der der Schnittstellen-Anpassungseinheit SE1-SEm zur Verfügung gestellte Datenträger DT nicht die volle Metadateninformation umfassen. In diesem Falle kann sich die Schnittstellen-Anpassungseinheit bzw. der Staging Area Server (SAS) an eine Instanz des Inhaltsanbieters CP, wie beispielsweise eine Verrechnungsstelle CH wenden, um die erforderlichen Metadaten MD zu bekommen. Dies erfolgt gegebenenfalls unter Angabe einer Binding Information, wobei die Schnittstellen-Anpassungseinheit SE1 bis SEm als alleiniger Download-Client auftritt, der nur die Metadaten MD anfordert. Gemäß Figur 3 sind demzufolge der Inhaltsanbieter CP und die Verrechungsstelle CH in einer Einheit CPCH zusammengefasst.

Optional kann der Inhaltsanbieter CP den verschlüsselten Inhalt VN auch komplett über eine Netzverbindung laden. Auch in diesem Falle werden alle Metadaten MD der Schnittstellen-Anpassungseinheit SE1 bis SEm zugeführt und in gleicher Weise verarbeitet, wie bereits vorstehend beschrieben wurde. In diesem Falle tritt jedoch die Schnittstellen-Anpassungseinheit SE1 bis SEm als alleiniger Downloadclient auf, der sowohl den verschlüsselten Inhalt VN als auch die Metadaten MD anfordert.

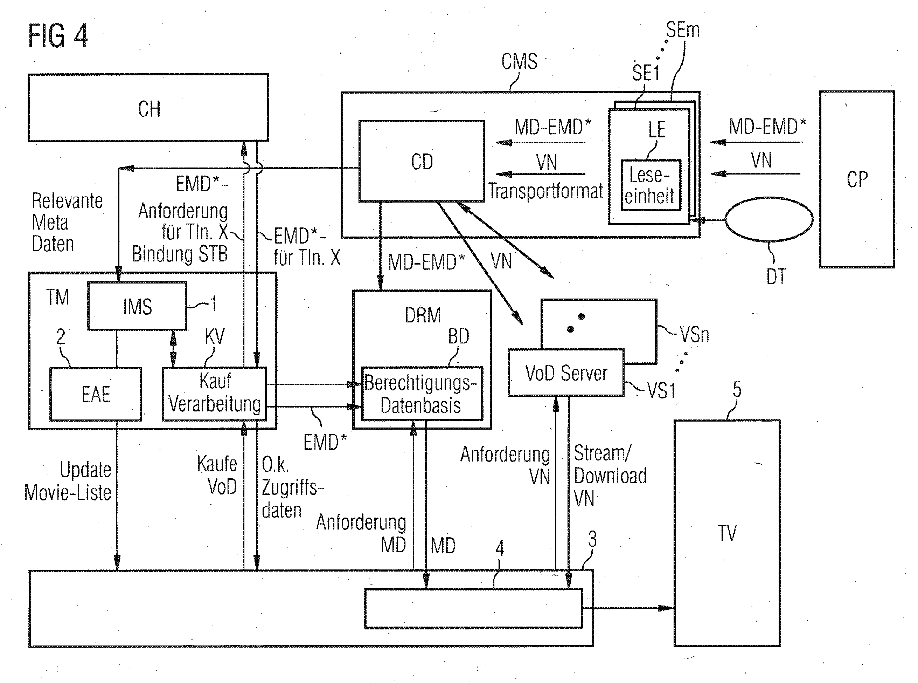

Figur 4 zeigt ein vereinfachtes Blockschaltbild zur Veranschaulichung einer VoD-Lösung gemäß einem dritten Ausführungsbeispiel, wobei gleiche Bezugszeichen gleiche Elemente wie in Figuren 1 bis 3 bezeichnen, weshalb auf eine wiederholte Beschreibung nachfolgend verzichtet wird.

Gemäß Figur 4 kann optional der Inhaltsanbieter CP Wert darauf legen, die einzelnen Teilnehmer separat zu kontrollieren und gegebenenfalls zu vergebühren, statistisch erfassen und/oder bewerben zu wollen. In diesem Falle lädt die Schnittstellen-Anpassungseinheit SE1 bis SEm den verschlüsselten Inhalt VN und nur den für die zentrale Verwaltung notwendigen Anteil von Metadaten MD-EMD* über eine Netzverbindung. Die für die Schnittstellen-Anpassungseinheit relevanten Metadaten, insbesondere die für die Schnittstellen-Anpassungseinheit relevante Bindungs-Information, wird jedoch dem Endgerät bzw. der Set-Top-Box STB bei Kauf eines Videos bzw. Films nicht mitgegeben, so dass diese sich direkt unter Preisgabe ihrer individuellen "Binding Information" an den Inhaltsanbieter CP bzw. dessen Verrechnungsstelle CH (Clearing House) wenden muss, um die fehlenden Informationen zu bekommen. Die fehlenden Informationen können hierbei insbesondere einen Teil der Entschlüsselungs-Metadaten EMD* darstellen. In diesem Falle kann der Inhaltsanbieter CP direkte Kenntnis über die Käufer bzw. den Teilnehmer erhalten. Die funktionale Öffnung über das digitale Rechtemanagement ermöglicht somit weitere Geschäftsmodelle. Aufgrund der Notwendigkeit der erfindungsgemäßen Bestands-Überprüfung (Inventory Check) werden derartige Anfragen an den Content Provider beispielsweise über die Kauf-Verarbeitungseinheit KV in der zentralen Koordinationsstelle TM geführt. In diesem Falle werden die noch fehlenden Entschlüsselungs-Metadaten EMD* nach Abschluss der Kauf-Verarbeitung zwischen dem Teilnehmer des Endgeräts 3 und der Verrechnungsstelle CH direkt der Rechte-Verwaltungseinheit DRM zugeführt und dort ein vollständiger Satz von Entschlüsselungs-Metadaten EMD dem Endgerät 3 bzw. deren Wiedergabeeinheit 4 zur Verfügung gestellt.

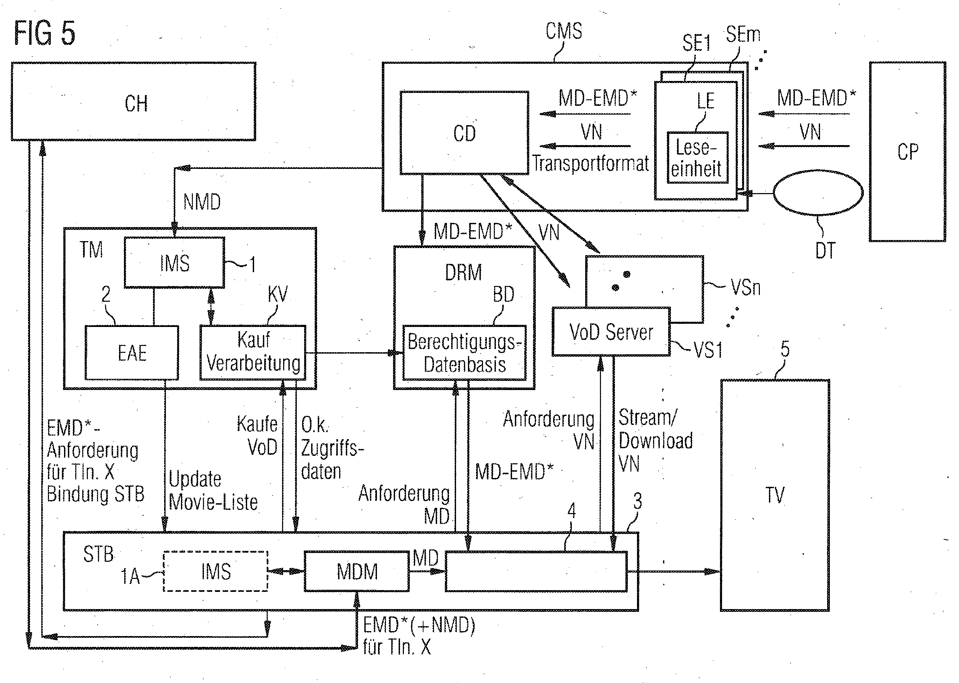

Figur 5 zeigt ein vereinfachtes Blockschaltbild zur Veranschaulichung einer VoD-Lösung gemäß einem vierten Ausführungsbeispiel, wobei gleiche Bezugszeichen gleiche Elemente wie in Figuren 1 bis 4 bezeichnen, weshalb auf eine wiederholte Beschreibung nachfolgend verzichtet wird.

Gemäß Figur 5 kann optional die Kontaktierung der Verrechnungsstelle CH des Inhaltsanbieters CP auch unter Umgehung der zentralen Koordinierungsstelle TM bzw. der Kauf-Verarbeitungseinheit KV erfolgen. In diesem Fall kann das Endgerät ferner eine dezentrale Bestands-Verwaltungseinheit 1A zum Verwalten des Endgeräts 3 aufweisen, wobei die dezentrale Bestands-Verwaltungseinheit 1A eine vorzugsweise für das Engerät 3 spezifische Funktionseinheit-Bestandsliste mit Nutzungsrechte-Metadaten NMD und insbesondere einer darin enthaltenen Revozierungsliste vergleicht, die von der Verrechnungsstelle CH zusätzlich bereitgestellt werden, wobei ein weiterer zusätzlich angeordneter Metadaten-Mischer MDM eine nicht freigegebene Funktionseinheit des Endgeräts für einen jeweiligen verschlüsselten Inhalt selektiv ansteuert, wenn beim Vergleich eine für den Inhalt nicht freigegebene Funktionseinheit ermittelt wird. Der Metadaten-Mischer MDM stellt hierbei aus dem zumindest einen Teil von Entschlüsselungs-Metadaten EMD* und dem unvollständigen Satz von Metadaten MD-EMD* einen vollständigen Satz von Entschlüsselungs-Metadaten EMD bereit. Dadurch können unerwartete Unverträglichkeiten mit den Daten des Endgeräts 3 zu einer Information des Endbenutzers und des Netzbetreibers führen. Auf eine Anforderung des Teils der Entschlüsselungs-Metadaten EMD* können demzufolge neben dem Teil von Entschlüsselungs-Metadaten EMD* auch weitere Nutzungsrechte-Metadaten NMD für das Endgerät bzw. einen Teilnehmer Tln.x bereitgestellt werden, die wiederum in der dezentralen Bestands-Verwaltungseinheit 1A ausgewertet und zu einer entsprechenden Ansteuerung des Endgeräts bzw. der Funktionseinheit 4 führen. Eine Ausgabe des Videos kann in diesem Falle unterbunden werden, oder es wird ein Upgrade in Richtung eines Netzbetreibers angefordert bzw. in Richtung des Teilnehmers als notwendige Voraussetzung für die korrekte Ausgabe des Videos ausgegeben. Dadurch erhält man neben einer maximalen Sicherheit hohe Transparenz für einen Inhaltsanbieter in einem Telekommunikationsnetzwerk zur gesicherten Verteilung von verschlüsselten Inhalten.

Im Falle von Push VoD-Szenarien, also den vorauseilenden Downloads eines (beispielsweise stark nachgefragten Inhalts bzw. Videos wie z.B. einem "Blockbuster") auf das Endgerät bzw. die Set-Top-Box STB, erfolgt nur der Download des verschlüsselten Inhalts VN. Interaktion mit der Verrechnungsstelle CH und dem Bezahlsystem erfolgt erst bei Kauf des Videos über die Kauf-Verarbeitungseinheit KV. Insofern ist das vorstehend beschriebene Verfahren bereits ausreichend.

Durch die Verlagerung der Kontrolle der Verteilung des Inhalts an die Teilnehmer auf beispielsweise eine Verrechnungsstelle CH des Inhaltsanbieters CP können weitergehende Sicherheitsvorkehrungen realisiert werden. Der Netzbetreiber wird hierbei transparent für die Vorgaben des digitalen Rechtemanagements, wobei keine freilaufenden separaten Einstellungen an den Infrastrukturkomponenten des Netzbetreibers erforderlich sind, sondern eine automatische Umsetzung der Vorgaben des digitalen Rechtemanagements von gegebenenfalls unterschiedlichen Inhaltsanbietern realisiert werden können.

### TV-Broadcast-Szenario

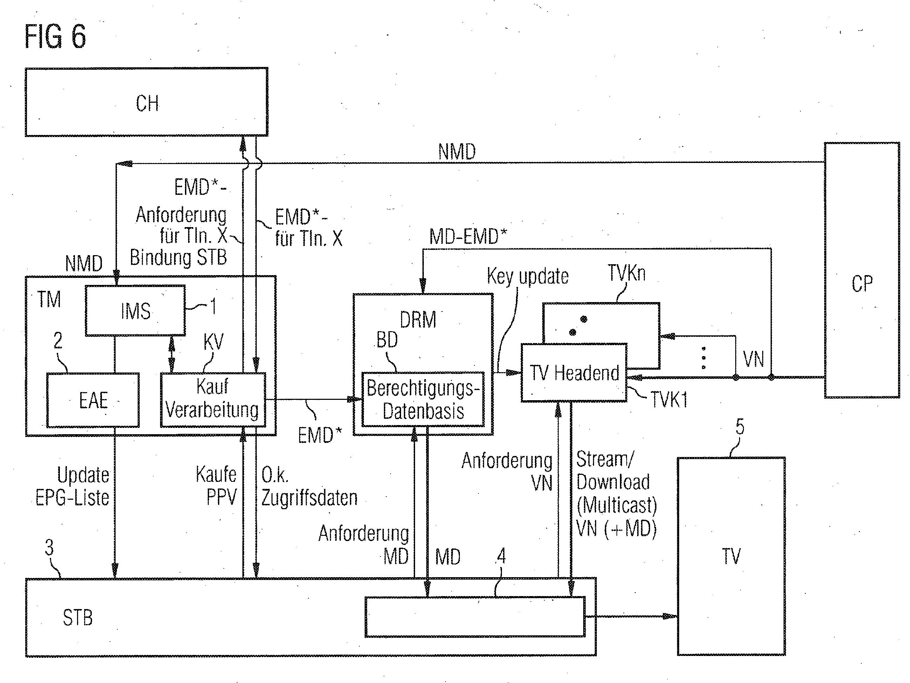

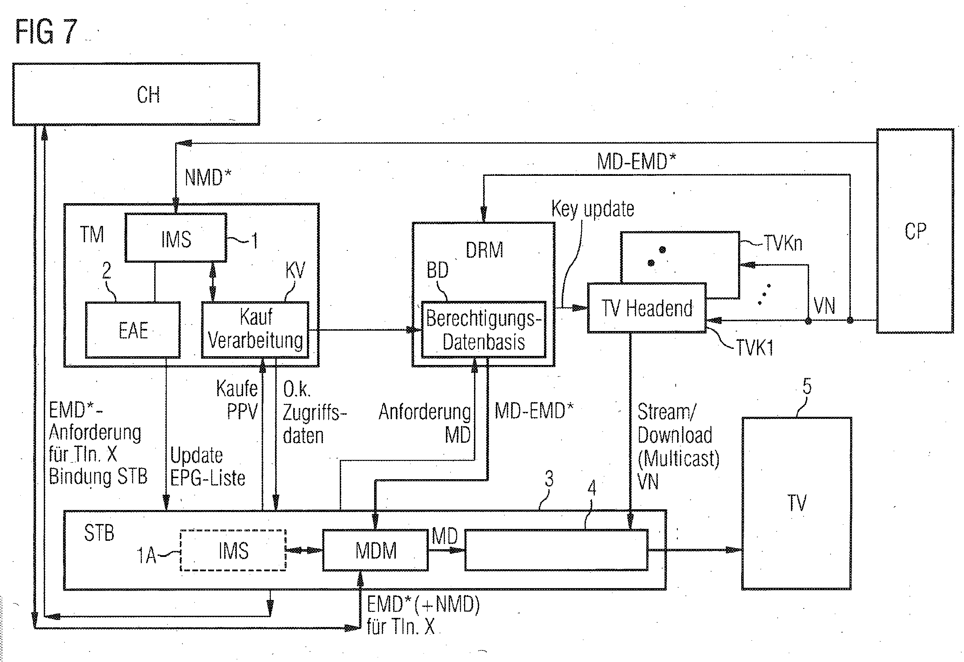

Figuren 6 und 7 zeigen vereinfachte Blockschaltbilder einer TV-Broadcast-Lösung gemäß einem ersten und zweiten Ausführungsbeispiel, wobei gleiche Bezugszeichen gleiche Elemente wie in den Figuren 1 bis 5 bezeichnen, weshalb auf eine wiederholte Beschreibung nachfolgend verzichtet wird.

Der Kauf einer PPV-Sendung (Pay Per View) und eines kanalspezifischen Programms des Broadcastmodus sind hierbei sehr ähnlich. Das kanalspezifische Programm ist ein Sonderfall eines sehr langen PPV-Ereignisses, weshalb im Folgenden der PPV-Fall (Pay Per View) explizit beschrieben wird.

Figur 6 zeigt ein vereinfachtes Blockschaltbild zur Veranschaulichung einer derartigen TV-Broadcast-Lösung gemäß einem ersten Ausführungsbeispiel, wobei im Gegensatz zur vorstehend beschriebenen VoD-Lösung die Inhalts-Verwaltungseinheit CMS entfällt und anstelle der VoD-Server VS1 bis VSn sogenannte TV-Kopfstellen bzw. TV-Headends TVK1 bis TVKn vorgesehen sind, die von der Rechte-Verwaltungseinheit DRM einen Key Update bzw. eine Schlüsselaktualisierung erhalten kann. Letzteres ist möglich, falls die Metadaten MD komplett im Transportstrom transportiert werden sollen oder im Falle einer additiven Verschlüsselung mit den Mitteln des eigenen DRM Systems.

Gemäß Figur 6 müssen die für das umfassende digitale Rechtemanagement-System notwendigen Daten wie in der VoD-Lösung zum Endgerät 3 übertragen werden. Ein Teil davon kann unter Umständen im Transportstrom übertragen werden. Da es zu einer Bindung des Inhalts an ein Medium kommen soll, ein zum Transport notwendiges Medium aber nicht gegeben ist, liegt eine dem Fall eines Downloads eines Videos ähnlicher Fall vor. Das heißt, der verschlüsselte Inhalt VN wird stellvertretend an die als Inhalts-Bereitstellungseinheit fungierenden TV-Kopfstellen TVK1 bis TVKn gebunden oder direkt an das Endgerät 3 bzw. die Settopbox (STB). In beiden Fällen wenden sich die TV-Kopfstellen TVK1 bis TVKn bzw. die Endgeräte 3 an die Verrechnungsstelle CH des Inhaltsanbieters CP, wobei im vorliegenden Fall die Verhältnisse für den Fall einer Bindung an das Endgerät 3 dargestellt ist.

Gemäß Figur 6 erfolgt der aus Figuren 1 bis 5 bereits bekannte Inventory Check bzw. die Bestands-Überprüfung vorzugsweise zentral in der Koordinationsstelle TM bzw. deren Be-. stands-Verwaltungseinheit 1. Insbesondere kann ein für ein PPV-Ereignis negativer Inventory Check zur Nichtausgabe oder Kennzeichnung diese PPV-Ereignisses in den EPG-(Electronic Program Guide) Daten eines betroffenen Teilnehmers führen. Damit kann der Teilnehmer dieses PPV-Ereignis nicht auswählen bzw. bekommt einen Hinweis auf mangelnde Eignung seines Endgeräts 3.

Gemäß Figur 7 kann die Bestands-Überprüfung auch dezentral in dem Endgerät 3 bzw. deren dezentraler Bestands-Verwaltungseinheit 1A erfolgen, sofern eine dezentrale Bindung über das Endgerät 3 vorliegt. Eine negative Bestands-Überprüfung führt wiederum zu einer Bedienerinformation und der Nichtausgabe des PPV-Ereignisses unter Hinweis auf ein erforderliches Upgrade. Genauer gesagt ist das kritische PPV-Ereignis beispielsweise in der dem Teilnehmer ausgegebenen EPG-Liste (Electronic Program Guide) entsprechend gekennzeichnet, und/oder es erscheint ein entsprechender Hinweis bei Auswahl des PPV-Ereignisses durch den Teilnehmer. Die TV-Kopfstelle TVK1 bis TVKn kann den Transportstrom hinsichtlich der Verschlüsselung unverändert lassen oder wiederum optional gemäß den Vorgaben eines systemeigenen digitalen Rechtemanagements eine additive Verschlüsselung vornehmen.

Eine PVR-Funktionalität (Personal Video Recorder) in den Endgeräten 3 bzw. der Set-Top-Box (STB) ist über die Registratur bei der Verrechnungsstelle CH berücksichtigt. Eine jeweilige Kopierbarkeit des PPV-Ereignisses geht aus den jeweiligen Usage Rules bzw. Nutzungsrechten hervor. Diese können explizit über die Verrechnungsstelle CH direkt, den Inhaltsanbieter CP oder mittels des Transportstroms in das Endgerät 3 gelangen.

Eine netzbasierte PVR-Funktionalität (nPVR, network based Personal Video Recorder) ist Teil beispielsweise einer netzbasierten Aufnahmefunktionalität, wie z.B. "TV von Gestern". Ein hierfür zuständiger (nicht dargestellter) Server muss sich über die Verrechnungsstelle CH hierfür anmelden. Spezielle Nutzungsrechte können eine parallele Nutzbarkeit für den Endbenutzer einschränken. Beispielsweise können für ein PPV-Ereignis nicht mehr als 1000 Nutzer erlaubt sein.

Ist nur die Kontrolle der Erstellung von Kopien (keine Kopie zulässig, keine Zwischenspeicherung zulässig, keine dauerhafte Speicherung zulässig) erwünscht, so kann diese Beschränkung auch allein in dem Transportstrom übertragen werden in Form eines Metadatums. In diesem Fall kann eine Interaktion mit der Verrechnungsstelle CH entfallen. Eine Speicherung eines PPV-Ereignisses auf einem lokalen (integrierten) PVR (Personal Video Recorder) kann gemäß Vorgabe der jeweiligen Metadaten separat zustimmungspflichtig und bezahlpflichtig sein. Diese Information ist dann in den Metadaten des PPV-Ereignisses bereits enthalten. Will ein Teilnehmer nur eine Zwischenspeicherung vornehmen, so führt dies dazu, dass die Verrechnungsstelle CH abermals kontaktiert wird. Es gibt daher potenziell eine erste Interaktion vom Endgerät zur Verrechnungsstelle CH zur Ausgabe des PPV-Ereignisses bzw. des verschlüsselten Inhalts VN, und einen zweiten zur Zwischenspeicherung des PPV-Ereignisses bzw. verschlüsselten Inhalts VN.

Figur 7 entspricht im Wesentlichen der TV-Broadcast-Lösung gemäß Figur 6, wobei sie eine unmittelbare Ansteuerung des Endgerätes 3 durch eine Verrechnungsstelle CH gemäß Figur 5 aufweist. Zur Vermeidung von Wiederholungen wird daher auf die Beschreibung von Figur 5 verwiesen.

### Erstellen beweglicher Datenträger

Sowohl in der VoD-Lösung als auch in der TV-Broadcast-Lösung kann der Teilnehmer den Wunsch haben, ein Video oder ein TV-Programm auf einen beweglichen externen Datenträger zu überspielen bzw. aufzuzeichnen. Dies kann insbesondere ein optischer Datenträger, wie z.B. eine HD-DVD (High Density Digital Versatile Disc) oder eine Blu-Ray Disc sein. Für diesen Fall kann das Endgerät ferner einen Recorder bzw. einen Brenner als Funktionseinheit aufweisen, der konform zum digitalen Rechtemanagement-Standard ist. Dieser konforme Recorder bzw. Brenner kann in Abhängigkeit zur Aktivität des Teilnehmers z.B. über eine Fernbedienung des Endgeräts 3 gesteuert werden. Er benötigt hierbei alle gemäß dem verwendeten digitalen Rechtemanagement-Standard erforderlichen Metadaten MD und einen dem digitalen Rechtemanagement konformen Datenträger. Voraussetzung für die Erstellung einer Kopie auf dem externen Datenträger ist, dass die dem Endgerät 3 bzw. der Set-Top-Box STB bereitgestellten Metadaten MD diesen Kopiervorgang prinzipiell erlauben. Dies wird wiederum über die Bestands-Verwaltungseinheit 1 und zugehörige Endgeräte-Ansteuereinheit 2 sichergestellt.

Besagen die Metadaten ferner, dass eine Kopie nur nach Konsultation einer Instanz des Inhaltsanbieters CP möglich ist, wie beispielsweise einem "Managed Copy Server" des AACS, so geht dem Brennprozess eine der Interaktion mit der Verrechnungsstelle CH des Inhaltsanbieters CP entsprechende über die beispielsweise zentrale Koordinierungsstelle TM geführte oder direkt mit dem Endgerät 3 abgewickelte Interaktion voraus. Hierbei können wiederum Bezahlprozesse und Registrierprozesse über die Kauf-Verarbeitungseinheit KV der Koordinierungsstelle TM oder die genannte Instanz des Inhaltsanbieters CP erforderlich werden. Optional können auch spezifische für den Verkaufsprozess erforderliche Manipulationen am Inhalt, wie z.B. das Anbringen von Wasserzeichen (water marking), ausgelöst werden.

Auf diese Weise können neben der Video on Demand-Realisierung auch PPV (Pay Per View) und TV-Broadcast realisiert werden. Ferner werden Client-basierte cPVR-Lösungen und Netzwerk-basierte nPVR-Lösungen sowie "TV of Yesterday" oder "Push VoD" über eine Verrechnungsstelle des Inhaltsanbieters zur Realisierung aller relevanten Aufnahmesituationen ermöglicht. Auch die Realisierung eines Endgeräts mit einem zum digitalen Rechtemanagement-Standard konformen Aufnahmegerät ermöglicht das Brennen bzw. Schreiben auf bewegliche Datenträger.

Nachfolgend wird ein AACS-konformes VoD-Verfahren im Einzelnen beschrieben. Ein derartiges Verfahren erlaubt einem Benutzer, einen im Home Entertainment System (HES) verfügbaren Film auszuwählen und - falls alle erforderlichen Voraussetzungen inklusive derer, welche der AACS-Standard mitbringt, erfüllt sind - den Film in Echtzeit im sogenannten "Streaming"-Mode anzuschauen.

Gemäß einem grundsätzlichen Ablauf liefert der Inhaltsanbieter den Film bereits codiert und verschlüsselt inklusive der z.B. AACS-konformen Metadaten MD. Der Inhaltsanbieter, wie z.B. das Filmstudio, liefert den Originalfilm encodiert (z.B. H.264) und verschlüsselt an den Netzwerkbetreiber. Im Weiteren liefert der Inhaltsanbieter die Metadaten MD konform gemäß AACS "recordable" oder "pre-recorded medium", die in der Managementebene der Lösung entsprechend konvertiert (XML, eXtended Markup Language) werden, damit sie von der Kontrollebene der Lösung importiert werden können. Im vorliegenden Fall ist die Managementebene beispielsweise durch die Inhalts-Verwaltungseinheit CMS und die Kontrollebene beispielsweise durch die zentrale Koordinationsstelle TM realisiert.

Die Metadaten werden dabei zur Prüfung verwendet, ob die Funktionseinheit bzw. die Wiedergabeeinheit 4 AACS-konform ist und der Benutzer zur Video-Nutzung berechtigt ist (gegebenenfalls erweiterte User-Regeln). Über die Inhalts-Verwaltungseinheit (CMS) kann der Film bzw. die verschlüsselten. Nutzdaten VN auf mindestens einem VoD-Server abgelegt werden. Bevor das Video abgespielt werden kann, holt sich die Wiedergabeeinheit 4 die zur Generierung des Schlüssels zum Entschlüsseln des Films notwendigen Entschlüsselungs-Metadaten EMD von der Rechte-Verwaltungseinheit DRM und/oder zusätzlich von der Verrechnungsstelle CH. Nach erfolgreicher Überprüfung der Metadaten MD und einer Entschlüsselung auf der AACS-lizenzierten Wiedergabeeinheit kann der Video abgespielt werden.

Für ein AACS-recordable medium ergibt sich folgender Detailablauf, wobei nachfolgend keine zusätzliche Verschlüsselung im System vorgesehen ist.

Zunächst stellt der Inhaltsanbieter CP dem Staging Area Server SAS eine AACS-standardgemäße Datenträger, wie z.B. HD DVD oder Blu-Ray Disc zur Verfügung mit einem gemäß AACS-Standard aufbereiteten Film. Dieser Datenträger enthält neben dem codierten und verschlüsselten Film die gemäß AACS-Standard für recordable media vorgeschriebenen Metadaten Media Key Block (MKB), Media IP, Mac Value, Binding Nonce, verschlüsselter Key sowie Usage Rule.

Es erfolgt eine Prüfung der Zulässigkeit des Inhalts durch den Staging Area, Server unter Verwendung der Funktionen des Endgeräts bzw. dessen Abspielgeräts. Wird hierbei festgestellt, dass der Inhalt des Datenträgers DT gemäß AACS-Standard inplausibel ist, so erfolgt eine entsprechende Ausgabe an den Bediener und eine Rückweisung des Inhalts.

Der Staging Area Server bereitet anschließend den Inhalt in Form eines beispielsweise MPEG(-2)-Transportstroms (Motion Picture Expert Group) auf.

Unter Verwendung der vorstehend beschriebenen Ausgabefunktion gibt der Staging Area Server (SAS) den verschlüsselten Inhalt bzw. Film und die zugehörigen AACS-Metadaten MD separat an die Daten-Verteilungseinheit CD.

Die Datenverteilungseinheit CD sorgt für einen Download des gemäß AACS verschlüsselten und in MPEG-2-Transportformat vorliegenden Inhalts bzw. Films auf den bzw. die VoD-Server VS1 bis VSn. Im Weiteren lädt die Datenverteilungseinheit CD die Metadaten MD in Summe bzw. als vollständigen Satz oder als Teilsatz MD-EMD* auf die systemeigene Rechte-Verwaltungseinheit DRM.

Ein Teil der Metadaten, z.B. die Daten, die zur Aktualisierung der dem Teilnehmer visualisierten Movie-Liste notwendigen Informationen enthalten und insbesondere die Nutzungsrechte-Metadaten NMD werden von der Datenverteilungseinheit CD für die Bestands-Verwaltungseinheit 1 beispielsweise im XML-Format (Extended Markup Language) aufbereitet. Diese Daten können von der Middleware importiert werden.

Um eine Beeinträchtigung oder Abschaltung von Funktionen der VoD-Lösung durch das Einführen der gemäß dem AACS-Standard eingeführten Metadaten zu verhindern, befindet sich in dem AACS-Metadatenpaket bzw. den Nutzungsrechte-Metadaten NMD für die zentrale Koordinierungsstelle auch die Revozierungsliste des MKB. Die Bestands-Verwaltungseinheit umfasst eine Bestandsliste der im Netzwerk vorliegenden Funktionseinheiten der verschiedenen Endgeräte, wobei zu entsprechenden Metadaten eines jeweiligen verschlüsselten Inhalts ein Plausibilitäts-Check gegenüber dieser Funktionseinheiten-Bestandsliste durchgeführt wird. Wird hierbei festgestellt, dass ein Endgerät erstmalig revozierte Funktionseinheiten enthält, so wird eine Meldung an den Benutzer (z.B. ein Operator des Netzbetreibers) zum Upgrade bzw. zur Aktualisierung des Endgeräts ausgegeben.

Das Video kann in die Movie-Liste aufgenommen und beim Abruf des Videos die Verträglichkeit der Metadaten des Videos mit den Funktionseinheiten des Endgeräts verifiziert werden. Op-, tional kann das Video erst nach erfolgreichem Upgrade in die Movie-Liste aufgenommen werden, um eine potenzielle Beeinträchtigung der Funktion der Teilnehmereinrichtung auszuschließen.

Wählt ein Teilnehmer mit einem Endgerät, das eine revozierte Funktionseinheit bzw. ein ausgeschlossenes Gerät enthält, nun das Video aus, das eine Endgerätefunktion für die Ausgabe weiterer Videos potenziell schädigen würde, so wird dies unter Ausgabe eines geeigneten Hinweises an den Benutzer (z.B. "Endgerät muss zur Ausgabe dieses Films einen Upgrade erfahren") verhindert.

Wird ein verschlüsselter Inhalt, der über die AACS-konforme Schnittstelle in das Telekommunikationssystem eingebracht wurde, von einem Teilnehmer mit einem gemäß AACS geprüften Endgerät gekauft, welches keine revozierten Funktionseinheiten enthält, so erfolgt nach Abwicklung eines Bezahlvorgangs die Ausgabe des verschlüsselten Inhalts im Transportformat an das Endgerät des Teilnehmers.

Gleichzeitig werden dem Endgerät von der Rechte-Verwaltungseinheit DRM alle zugehörigen Metadaten und insbesondere die benötigten Entschlüsselungs-Metadaten EMD zur Verfügung gestellt. Da das Endgerät 2 über eine AACS-gemäße Wiedergabeeinheit 4 verfügt, können nach der vorausgehenden Bestands-Überprüfung ohne Risiko hinsichtlich Funktionsverlust die erhaltenen Daten entschlüsselt werden.

Die Entschlüsselung des Films erfolgt dann auf der AACS-konformen Wiedergabeeinheit 4. Dafür wird zunächst der Protected Area Key (KPA) berechnet, der für das Entschlüsseln des verschlüsselten Title Keys KT benötigt wird. Damit wird anschließend der Title Key entschlüsselt. Für diesen Rechenvorgang werden neben dem KPA auch die Usage Rules verwendet. Unter Verwendung des nun entschlüsselten Title Keys wird der MAC Value berechnet/verifiziert. Dieser wird mit dem MAC Value des zur Verfügung gestellten AACS-konformen Datenträgers verglichen, der mit den Metadaten geliefert wurde. Wenn alle Überprüfungen gemäß dem AACS-Standard erfolgreich waren, wird der verschlüsselte Film mit Hilfe des Title Keys entschlüsselt.

Danach kann das Endgerät den Film zur Ausgabe über das Interface zur Ausgabeeinheit 5 bzw. dem TV-Gerät übertragen. Das TV-Gerät 5 kann hierbei gemäß HDCP angebunden sein.

Nachfolgend wird ein Verfahren für ein AACS-pre-recorded medium beschrieben.

Der Inhaltsanbieter stellt dem Staging Area Server (SAS) eine AACS-standardgemäße Disk bzw. einen entsprechenden Datenträger DT zur Verfügung mit einem gemäß AACS-Standard aufbereiteten Film. Der Datenträger kann wiederum eine HD-DVD oder eine Blu-Ray-Disc darstellen. Diese enthält neben dem codierten und verschlüsselten Film die gemäß AACS-Standard für pre/ recorded media vorgeschriebenen Metadaten: Media Key Block (MKB), Key Conversion Data (KCD), Sequenz Key Block (SKB), Volume ID, verschlüsselte Keys sowie Usage Rules.

Es erfolgt wiederum eine Prüfung der Zulässigkeit des Inhalts durch den Staging Area Server unter Verwendung der Funktionen des Endgeräts bzw. dessen Abspielgeräts. Wird hierbei festgestellt, dass der Inhalt des Datenträgers DT gemäß AACS-Standard inplausibel ist, so erfolgt eine entsprechende Ausgabe an den Bediener und eine Rückweisung des Inhalts.

Der Staging Area Server bereitet anschließend den Inhalt in Form eines beispielsweise MPEG(-2)-Transportstroms (Motion Picture Expert Group) auf.

Unter Verwendung der vorstehend beschriebenen Ausgabefunktion gibt der Staging Area Server (SAS) den verschlüsselten Inhalt bzw. Film und die zugehörigen AACS-Metadaten MD separat an die Daten-Verteilungseinheit CD.

Die Datenverteilungseinheit CD sorgt für einen Download des gemäß AACS verschlüsselten und in MPEG-2-Transportformat vorliegenden Inhalts bzw. Films auf den bzw. die VoD-Server VS1 bis VSn. Im Weiteren lädt die Datenverteilungseinheit CD die Metadaten MD in Summe bzw. als vollständigen Satz oder als Teilsatz MD-EMD* auf die systemeigene Rechte-Verwaltungseinheit DRM.

Ein Teil der Metadaten z.B. die Daten, die zur Aktualisierung der dem Teilnehmer visualisierten Movie-Liste notwendigen Informationen enthalten, werden von der Daten-Verteilungseinheit für die Bestands-Verwaltungseinheit 1 in der zentralen Koordinierungsstelle TM aufbereitet, wobei beispielsweise eine Umwandlung in das XML-Format durchgeführt wird. Insbesondere können hierbei Nutzungsrechte-Metadaten NMD und vorzugsweise ein MKB mit Revozierungsliste übertragen werden.

Diese Daten können von der Middleware importiert werden.

Um eine Beeinträchtigung oder Abschaltung von Funktionen der VoD-Lösung durch das Einführen der gemäß dem AACS-Standard eingeführten Metadaten zu verhindern, befindet sich in dem AACS-Metadatenpaket bzw. den Nutzungsrechte-Metadaten NMD für die zentrale Koordinierungsstelle auch die Revozierungsliste des MKB. Die Bestands-Verwaltungseinheit umfasst eine Bestandsliste der im Netzwerk vorliegenden Funktionseinheiten der verschiedenen Endgeräte, wobei zu entsprechenden Metadaten eines jeweiligen verschlüsselten Inhalts ein Plausibilitäts-Check gegenüber dieser Funktionseinheiten-Bestandsliste durchgeführt wird. Wird hierbei festgestellt, dass ein Endgerät erstmalig revozierte Funktionseinheiten enthält, so wird eine Meldung an den Benutzer zum Upgrade bzw. zur Aktualisierung des Endgeräts ausgegeben.

Das Video kann in die Movie-Liste aufgenommen und beim Abruf des Videos die Verträglichkeit der Metadaten des Videos mit den Funktionseinheiten des Endgeräts verifiziert werden. Optional kann das Video erst nach erfolgreichem Upgrade in die Movie-Liste aufgenommen werden, um eine potenzielle Beeinträchtigung der Funktion der Teilnehmereinrichtung auszuschließen.

Wählt ein Teilnehmer mit einem Endgerät, das eine revozierte Funktionseinheit bzw. ein ausgeschlossenes Gerät enthält, nun das Video aus, das eine Endgerätefunktion für die Ausgabe weiterer Videos potenziell schädigen würde, so wird dies unter Ausgabe eines geeigneten Hinweises an den Benutzer (z.B. "Endgerät muss zur Ausgabe dieses Films einen Upgrade erfahren") verhindert.

Wird ein verschlüsselter Inhalt, der über die AACS-konforme Schnittstelle in das Telekommunikationssystem eingebracht wurde, von einem Teilnehmer mit einem gemäß AACS geprüften Endgerät gekauft, welches keine revozierten Funktionseinheiten enthält, so erfolgt nach Abwicklung eines Bezahlvorgangs die Ausgabe des verschlüsselten Inhalts im Transportformat an das Endgerät des Teilnehmers.

Gleichzeitig werden dem Endgerät von der Rechte-Verwaltungseinheit DRM alle zugehörigen Metadaten und insbesondere die benötigten Entschlüsselungs-Metadaten EMD zur Verfügung gestellt. Da das Endgerät 2 über eine AACS-gemäße Wiedereingabeeinheit 4 verfügt, können nach der vorausgehenden Bestands-Überprüfung ohne Risiko hinsichtlich Funktionsverlust die erhaltenen Daten entschlüsselt werden.

Die Entschlüsselung des Films erfolgt auch auf dem AACS-konformen Endgerät bzw. deren Wiedereingabeeinheit 4. In dem Endgerät 3 wurde hierbei bereits vom Endgerätehersteller ein von der AACS-LA geliefertes Schlüsselpaket mit öffentlichen 253 Device Keys und 256 Sequenz Keys integriert. Zunächst werden die Device Keys und der via Metadaten gelieferte MKB zur Berechnung des Media Keys KM verwendet. Anschließend wird mit Hilfe des KM und des ebenfalls via Metadaten gelieferten Sequenz Key Blocks (SKB) die Media Key Variant (KMV) berechnet. Mit dieser KMV und der via Metadaten gelieferten Volume ID wird ein Hash gebildet, der dann für das Entschlüsseln des auch via Metadaten gelieferten verschlüsselten Title Key KT verwendet wird. Mit dem KT wird dann der verschlüsselte Film entschlüsselt.

Danach kann wiederum das Endgerät den Film zur Ausgabe über das Interface zur Ausgabeeinheit 5 bereitstellen, wobei das TV-Gerät hierbei gemäß den Erfordernissen des AACS beispielsweise über HDCP angebunden ist.

Hinsichtlich der TV-Broadcast-Lösung können aktuelle TV-Broadcast-Programme in Echtzeit dem End-Benutzer via seiner z.B. ADSL-Verbindung (Asynchronous Digital,Subscriber Line) zur Verfügung gestellt werden. Dieses zur Verfügungstellen kann beispielsweise über ein "streamed" und/oder "multicasted" System durchgeführt werden. Einige der Programme müssen extra bezahlt werden. Dieses Bezahlfernsehen ("Pay-TV") ist verschlüsselt, um unbefugte Nutzung zu verhindern. Eine Kategorie des Pay-TV ist das sogenannte "Pay Per View" (PPV), wo für einzelne Sendungen bezahlt werden muss.

Ein weiteres Ausführungsbeispiel der TV-Broadcast-Lösung mit direkter individueller Verbreitungskontrolle durch den Inhaltsanbieter ist das Anlegen einer AACS-konformen Kopie, eine sogenannte "managed copy" von pre-recorded Inhalten. Mögliche Szenarien sind Kopien des Inhalts in der Wiedergabeeinheit 4 des Kunden (z.B. cPVR) oder Kopien innerhalb des Inhaltsbereichs einer Home Entertainment Lösung (z.B. Kopie auf mehrere VoD-Server, um auf bevorzugte Inhalte schnell zugreifen zu können).

Nachfolgend wird eine PPV-Lösung mit dezentraler Bestands-Überprüfung beschrieben.

Das nachfolgend beschriebene Szenario ist ein dem "Download" von Inhalten ähnlicher Fall. Hierzu verteilt der Inhaltsanbieter den PPV-Inhalt beispielsweise AES-verschlüsselt mit gemäß den Erfordernissen des AACS-Standards ausgewähltem Title Key KT direkt an das Endgerät 3 bzw. die Set-Top-Box STB. Dieser Inhalt ist noch nicht auf einem AACS-konformen Wiedergabegerät abspielbar. Ferner verteilt der Inhaltsanbieter relevante Metadaten (z.B. MKB, ...) an die Bestands-Verwaltungseinheit 1 in der zentralen Koordinationsstelle TM. Die bereits von der VoD-Lösung bekannte Bestands-Überprüfung erfolgt hierbei zentral in der Koordinationsstelle TM wegen der Bindung über das Endgerät bzw. die Set-Top-Box STB. Eine hier negative Bestands-Überprüfung bzw. negativer Inventory Check führt zur Bedienerinformation und der Nichtausgabe des PPV-Ereignisses unter Hinweis auf ein erforderliches Upgrade.

Um jedoch den verschlüsselten Inhalt über das AACS-konförme Abspielgerät bzw. die Wiedergabeeinheit 4 abspielen zu können, ist sicherheitshalber und zusätzlich ein weiterer Inventory Check bzw. eine weitere Bestands-Überprüfung notwendig. Dazu muss das Endgerät mit der Verrechnungsstelle CH des Inhaltsanbieters kommunizieren. Die Verrechnungsstelle empfängt den MKB und die sogenannte Binding Info "Ticket" von dem Endgerät, generiert damit die notwendigen kryptografischen Informationen zum Entschlüsseln des Inhalts und sendet diese zurück zum Endgerät.

Nach erfolgreichem Inventory Check bzw. erfolgreicher Bestands-Überprüfung mit der zentralen Bestands-Verwaltungseinheit 1 und der Verrechnungsstelle CH kann das Endgerät den Inhalt bzw. die PPV-Sendung zur Auswahl anbieten bzw. zur Ausgabe über das Interface zum TV-Gerät 5 bereitstellen. Wiederum ist das TV-Gerät gemäß den Erfordernissen von AACS über beispielsweise eine HDCP-Schnittstelle angebunden.

Nachfolgend wird ein Verfahren für eine AACS-konforme Kopie ("managed copy") von pre-recorded Inhalten beschrieben.

Als Ausführungsbeispiel für eine derartige AACS-konforme "managed copy" sei das "Client Private Video Recording (cPVR)" genannt. Das Client-seitige PVR ermöglicht eine Aufnahme und das Abspielen von über IPTV (Internet Protocol TV) ausgestrahlten Inhalten auf einem AACS-konformen Endgerät. Dieses Endgerät muss ein internes Festplattenlaufwerk (HDD, Hard Disc Drive) für die cPVR-Aufnahme beinhalten.

In diesem Szenario enthält das Endgerät eine lizenzierte Wiedergabeeinheit 4 sowie die Funktionalität einer "managed copy machine" MCM. Die Verrechnungsstelle stellt hier einen nicht dargestellten "managed copy server" (MCS) dar.

Die PVR-Funktionalität in dem Endgerät 3 ist über die Registratur der Verrechnungsstelle CH berücksichtigt. Kopierbarkeit des PPV-Ereignisses geht aus den Usage Rules hervor. Diese werden von der Verrechnungsstelle CH bzw. dem Inhaltsanbieter an das Endgerät verteilt.

Neben den verschlüsselten Nutzdaten VN verteilt der Inhaltsanbieter auch die "managed copy" relevanten Metadaten MD wie "scripts", URL (Uniformal Ressource Locator), pre-recorded Media Serial Number (PMSM), "Content ID", usw.

Das Endgerät bzw. deren "managed copy machine" verwendet die gelieferte URL, um die Verrechnungsstelle zu identifizieren, mit dem zur Autorisierung für das Anlegen der Kopie kommuniziert werden soll.

Das Endgerät erstellt und sendet eine Anforderung bzw. "request offer" an die Verrechnungsstelle CH, um zu ermitteln, welche "managed copy"-Angebote zur Verfügung stehen.

Die Verrechnungsstelle CH erstellt eine Liste ihrer Angebote und sendet diese an das Endgerät. Das Endgerät stellt diese Angebots-/Auswahl-Liste dem Nutzer zur Verfügung. Das Endgerät sendet ferner eine "request permission"-Anfrage an die Verrechnungsstelle. Die Verrechnungsstelle CH verifiziert diese Anfrage und erstellt/sendet eine kryptografisch geschützte Antwort an das Endgerät 3. Das Endgerät verifiziert die Integrität der Antwort und, wenn alle Bedingungen erfüllt sind, wird die "managed copy" angelegt.

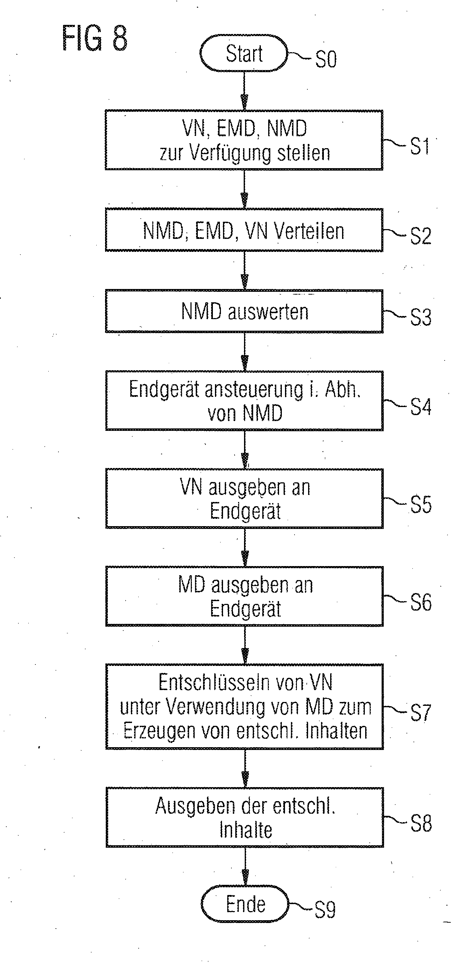

Figur 8 zeigt ein vereinfachtes Flussdiagramm zur Veranschaulichung wesentlicher Verfahrensschritte des erfindungsgemäßen Verfahrens zur gesicherten Verteilung von Inhalten in einem Telekommunikationsnetzwerk.

Nach einem Start im Schritt S0 wird in einem Schritt S1 zunächst ein verschlüsselter Inhalt VN sowie zugehörige Metadaten MD in Form von Entschlüsselungs-Metadaten EMD und Nutzungsrechte-Metadaten NMD dem System zur Verfügung gestellt. In einem Schritt S2 werden anschließend die Metadaten MD sowie der verschlüsselte Inhalt VN innerhalb des Systems bzw. des Netzwerks verteilt. In einem Schritt S3 werden insbesondere die Nutzungsrechte-Metadaten NMD von einer Bestands-Verwaltungseinheit ausgewertet, wobei in einem Schritt S4 eine Endgeräteansteuerung in Abhängigkeit von den ausgewerteten Nutzungsrechte-Metadaten NMD erfolgt.

In einem Schritt S5 werden die verschlüsselten Inhalte an das Endgerät ausgegeben und in einem Schritt S6 die zur Entschlüsselung des verschlüsselten Inhalts VN benötigten Entschlüsselungs-Metadaten. In einem Schritt S7 erfolgt das Entschlüsseln des verschlüsselten Inhalts VN unter Verwendung der Metadaten MD, wodurch entschlüsselte Inhalte erzeugt werden, die in einem Schritt S8 ausgegeben werden können. Das Verfahren endet in einem Schritt S9.

Die Erfindung wurde vorstehend anhand eines AACS-gemäßen digitalen Rechtemanagement-Systems beschrieben. Sie ist jedoch nicht darauf beschränkt und umfasst in gleicher Weise auch alternative digitale Rechtemanagement-Systeme. Ferner wurde die Erfindung anhand einer Set-Top-Box als Endgerät beschrieben. Sie ist jedoch nicht darauf beschränkt und umfasst in gleicher Weise auch alternative Telekommunikationsendgeräte.

## Patentansprüche

1. Vorrichtung zur gesicherten Verteilung von Inhalten in einem Telekommunikationsnetzwerk mit:
einer Bestands-Verwaltungseinheit (1) zum Verwalten von Endgeräten (3), welche zumindest eine Funktionseinheit (4) enthalten, auf der Grundlage von zu einem verschlüsselten Inhalt (VN) gehörigen Nutzungsrechte-Metadaten (NMD), die eine Revozierungsliste zum Ausschließen von Funktionseinheiten (4) aufweisen; und
einer Endgeräte-Ansteuereinheit (2) zum Ansteuern der Endgeräte (3), wobei die Bestands-Verwaltungseinheit (1) die Revozierungsliste mit einer Funktionseinheit-Bestandsliste vergleicht und die Endgeräte-Ansteuereinheit (2) das Endgerät (3) für einen jeweiligen verschlüsselten Inhalt selektiv ansteuert, wenn beim Vergleich eine für den Inhalt ausgeschlossene Funktionseinheit (4) ermittelt wird, wobei die selektive Ansteuerung eine Sperrung des Endgeräts (3) und/oder einer Funktionseinheit (4) umfasst, eine eingeschränkte Auswahlmöglichkeit von angebotenen Inhalten oder eine Aktualisierung des Endgeräts (3) durch die Endgeräte-Ansteuereinheit (2).

2. Vorrichtung nach Patentanspruch 1, mit
einer Schnittstelle zu einer Verrechnungsstelle (CH) zum Bereitstellen von zumindest einem Teil von Entschlüsselungs-Metadaten (EMD*) für den verschlüsselten Inhalt (VN).

3. Vorrichtung nach Patentanspruch 2 mit
einer Rechte-Verwaltungseinheit (DRM) zum Bereitstellen von zum verschlüsselten Inhalt (VN) gehörigen Metadaten (MD), die zumindest einen restlichen Teil von Entschlüsselungs-Metadaten (EMD) enthalten; und
einer Inhalts-Bereitstellungseinheit (VS1-VSn; TVK1-TVKn) zum Bereitstellen der zugehörigen verschlüsselten Inhalte (VN).

4. Vorrichtung nach einem der Patentansprüche 1 bis 3, mit einer Inhalts-Verwaltungseinheit (CMS), die zumindest eine Schnittstellenanpassungseinheit (SE1-SEm) zum Anpassen eines ersten Datenformats des verschlüsselten Inhalts (VN) und der zugehörigen Nutzungsrechte- und Entschlüsselungs-Metadaten (NMD, EMD) an ein zweites Datenformat und
eine Datenverteilungseinheit (CD) aufweist, die den verschlüsselten Inhalt (VN) und die zugehörigen Nutzungsrechte- und Entschlüsselungs-Metadaten (NMD, EMD) im Telekommunikationsnetzwerk verteilt.

5. Vorrichtung nach Patentanspruch 4,
**dadurch gekennzeichnet, dass** die Datenverteilungseinheit (CD) zumindest die Nutzungsrechte-Metadaten (NMD) an die Bestands-Verwaltungseinheit (1), zumindest die Entschlüsselungs-Metadaten (EMD) an die Rechte-Verwaltungseinheit (DRM) und zumindest den verschlüsselten Inhalt (VN) an die Inhalts-Bereitstellungseinheit (VS1-VSn) verteilt.

6. Vorrichtung nach einem der Patentansprüche 1 bis 5, mit einer Kauf-Verarbeitungseinheit (KV) zur Abwicklung einer Kauf-Verarbeitung für einen verschlüsselten Inhalt (VN) zwischen dem Endgerät (2) und einem Inhalts-Anbieter (CP).

7. Vorrichtung nach Patentanspruch 6,
**dadurch gekennzeichnet, dass** die Kauf-Verarbeitungseinheit (KV) den zumindest einen Teil der Entschlüsselungs-Metadaten (EMD*) der Rechte-Verwaltungseinheit (DRM) zuführt, die damit einen vollständigen Satz von Entschlüsselungs-Metadaten (EMD) bereitstellt.

8. Vorrichtung nach einem der Patentansprüche 2 bis 7, **dadurch gekennzeichnet, dass** das Endgerät (3) einen Metadaten-Mischer (MDM) aufweist, der aus dem zumindest einen Teil von Entschlüsselungs-Metadaten (EMD*) und einem unvollständigen Satz von Metadaten (MD-EMD*) einen vollständigen Satz von Entschlüsselungs-Metadaten (EMD) bereitstellt.

9. Vorrichtung nach Patentanspruch 8,
**dadurch gekennzeichnet, dass** das Endgerät (3) ferner eine dezentrale Bestands-Verwaltungseinheit (1A) zum Verwalten des Endgeräts (3) aufweist, wobei die dezentrale Bestands-Verwaltungseinheit (1A) eine Funktionseinheit-Bestandsliste mit Nutzungsrechte-Metadaten (NMD) vergleicht, die von der Verrechungsstelle (CH) zusätzlich bereitgestellt werden, und
der Metadaten-Mischer (MDM) eine ausgeschlossene Funktionseinheit (4) des Endgeräts (3) für einen jeweiligen verschlüsselten Inhalt selektiv ansteuert, wenn beim Vergleich eine für den Inhalt ausgeschlossene Funktionseinheit (4) ermittelt wird.

10. Vorrichtung nach einem der Patentansprüche 1 bis 9, **dadurch gekennzeichnet, dass** die Funktionseinheit (4) eine Rechteverwaltungskonforme Wiedergabeeinheit ist, die den verschlüsselten Inhalt (VN) mit den Entschlüsselungs-Metadaten (EMD) entschlüsselt.

11. Vorrichtung nach einem der Patentansprüche 1 bis 10, **dadurch gekennzeichnet, dass** der verschlüsselte Inhalt (VN) und die zugehörigen Metadaten (MD) für eine Übertragung im Telekommunikationsnetzwerk zusätzlich verschlüsselt werden.

12. Vorrichtung nach einem der Patentansprüche 4 bis 11, **dadurch gekennzeichnet, dass** der Schnittstellenanpassungseinheit (SE1-SEm) ein beweglicher Datenträger zugeführt wird, der den verschlüsselten Inhalt (VN) und einen Teil der Metadaten (MD) enthält.

13. Vorrichtung nach einem der Patentansprüche 1 bis 12, **dadurch gekennzeichnet, dass** die Funktionseinheit (4) eine Rechte-verwaltungskonforme Aufnahmeeinheit ist, die einen verschlüsselten Inhalt (VN) mit zugehörigen Metadaten (MD) auf bewegliche Datenträger schreibt.

14. Verfahren zur gesicherten Verteilung von Inhalten in einem Telekommunikationsnetzwerk mit den Schritten:
Verfügbarmachen (S1) von verschlüsselten Inhalten (VN) und zugehörigen Nutzungsrechte- und Entschlüsselungs-Metadaten (NMD, EMD), die eine Revozierungsliste zum Ausschließen von Funktionseinheiten (4) aufweisen;
Verteilen (S2) der Inhalte (VN) und der zugehörigen Metadaten (MD) im Telekommunikationsnetzwerk;
Auswerten (S3) der Revozierungsliste der Nutzungsrechte-Metadaten (NMD); und
Ansteuern (S4) eines Endgeräts (3) des Telekommunikationsnetzwerks in Abhängigkeit von der Auswertung der Revozierungsliste und seinen enthaltenen Funktionseinheiten (4), wenn eine für den Inhalt ausgeschlossene Funktionseinheit (4) ermittelt wird, wobei das Ansteuern ein Sperren des Endgeräts (3) und/oder einer Funktionseinheit (4) umfasst, ein Einschränken einer Auswahlmöglichkeit von angebotenen Inhalten oder ein Aktualisieren des Endgeräts (3) durch die Endgeräte-Ansteuereinheit (2).

15. Verfahren nach Patentanspruch 14 mit den weiteren Schritten:
Ausgeben (S5, S6) der verschlüsselten Inhalte (VN) und von Entschlüsselungs-Metadaten (EMD) an das Endgerät (3);
Entschlüsseln (S7) der verschlüsselten Inhalte (VN) auf der Grundlage der Entschlüsselungs-Metadaten (EMD); und
Ausgeben (S8) der entschlüsselten Inhalte.

16. Verfahren nach Patentanspruch 15,
**dadurch gekennzeichnet, dass** ein Teil der Entschlüsselungs-Metadaten (EMD*) von einer Verrechungsstelle (CH) ausgegeben wird.

17. Verfahren nach einem der Patentansprüche 15 oder 16, **dadurch gekennzeichnet, dass** zumindest ein Teil der Entschlüsselungs-Metadaten (EMD) von einer Rechte-Verwaltungseinheit (DRM) zum Verwalten von digitalen Nutzungsrechten ausgegeben wird und
die verschlüsselten Inhalte (VN) von einer Inhalts-Bereitstellungseinheit ausgegeben werden.

18. Verfahren nach einem der Patentansprüche 14 bis 17, **dadurch gekennzeichnet, dass** beim Verteilen (S2) zumindest die Nutzungsrechte-Metadaten (NMD) an die BestandsVerwaltungseinheit (1), zumindest die Entschlüsselungs-Metadaten (EMD) an die Rechte-Verwaltungseinheit (DRM) und zumindest die verschlüsselten Inhalte an die Inhalts-Bereitstellungseinheit (VS1-VSn) verteilt werden.

19. Verfahren nach einem der Patentansprüche 14 bis 18, **gekennzeichnet durch** den weiteren Schritt:
Abwicklung eine Kauf-Verarbeitung für einen verschlüsselten Inhalt zwischen dem Endgerät (3) und einem Inhalts-Anbieter (CP).

20. Verfahren nach einem der Patentansprüche 17 bis 19, **dadurch gekennzeichnet, dass** ein vollständiger Satz von Entschlüsselungs-Metadaten (EMD) aus dem Teil der Entschlüsselungs-Metadaten (EMD*) von der Verrechnungsstelle (CH) und dem Teil der Entschlüsselungs-Metadaten (MD-EMD*) von der Rechte-Verwaltungseinheit (DRM) zusammengesetzt wird.

## Claims

1. Apparatus for the secured distribution of contents in a telecommunication network having:
an inventory management unit (1) for managing terminals (3) that contain at least one functional unit (4) on the basis of use-rights metadata (NMD) that are associated with an encrypted content (VN) and that have a revocation list for excluding functional units (4); and
a terminal actuation unit (2) for actuating the terminals (3), wherein the inventory management unit (1) compares the revocation list with a functional-unit inventory list and the terminal actuation unit (2) selectively actuates the terminal (3) for a respective encrypted content when the comparison involves ascertainment of a functional unit (4) that is excluded for the content, wherein the selective actuation comprises disabling of the terminal (3) and/or of a functional unit (4), a restricted selection option for provided contents or updating of the terminal (3) by the terminal actuation unit (2).

2. Apparatus according to Patent Claim 1, having an interface to a clearing house (CH) for providing at least a portion of decryption metadata (EMD*) for the encrypted content (VN).

3. Apparatus according to Patent Claim 2 having
a rights management unit (DRM) for providing metadata (MD) that are associated with the encrypted content (VN) and that contain at least one remaining portion of decryption metadata (EMD); and
a content provision unit (VS1-VSn; TVK1-TVKn) for providing the associated encrypted contents (VN).

4. Apparatus according to one of Patent Claims 1 to 3, having a content management unit (CMS) that has at least one interface matching unit (SE1-SEm) for matching a first data format of the encrypted content (VN) and of the associated use-rights and decryption metadata (NMD, EMD) to a second data format and a data distribution unit (CD) that distributes the encrypted content (VN) and the associated use-rights and decryption metadata (NMD, EMD) in the telecommunication network.

5. Apparatus according to Patent Claim 4,
**characterized in that** the data distribution unit (CD) distributes at least the use-rights metadata (NMD) to the inventory management unit (1), at least the decryption metadata (EMD) to the rights management unit (DRM) and at least the encrypted content (VN) to the content provision unit (VS1-VSn).

6. Apparatus according to one of Patent Claims 1 to 5, having a purchase processing unit (KV) for handling purchase processing for an encrypted content (VN) between the terminal (3) and a content provider (CP).

7. Apparatus according to Patent Claim 6,
**characterized in that** the purchase processing unit (KV) supplies the at least one portion of the decryption metadata (EMD*) to the rights management unit (DRM), which thereby provides a complete set of decryption metadata (EMD).

8. Apparatus according to one of Patent Claims 2 to 7,
**characterized in that** the terminal (3) has a metadata mixer (MDM) that provides a complete set of decryption metadata (EMD) from the at least one portion of decryption metadata (EMD*) and an incomplete set of metadata (MD-EMD*).

9. Apparatus according to Patent Claim 8,
**characterized in that** the terminal (3) also has a local inventory management unit (1A) for managing the terminal (3), wherein the local inventory management unit (1A) compares a functional-unit inventory list with use-rights metadata (NMD) that are additionally provided by the clearing house (CH), and the metadata mixer (MDM) selectively actuates an excluded functional unit (4) of the terminal (3) for a respective encrypted content when the comparison involves ascertainment of a functional unit (4) that is excluded for the content.

10. Apparatus according to one of Patent Claims 1 to 9,
**characterized in that** the functional unit (4) is a rights-management-compliant reproduction unit that decrypts the encrypted content (VN) with the decryption metadata (EMD).

11. Apparatus according to one of Patent Claims 1 to 10,
**characterized in that** the encrypted content (VN) and the associated metadata (MD) are additionally encrypted for transmission in the telecommunication network.

12. Apparatus according to one of Patent Claims 4 to 11,
**characterized in that** the interface matching unit (SE1-SEm) is supplied with a mobile data storage medium that contains the encrypted content (VN) and a portion of the metadata (MD).

13. Apparatus according to one of Patent Claims 1 to 12,
**characterized in that** the functional unit (4) is a rights-management-compliant recording unit that writes an encrypted content (VN) with associated metadata (MD) to mobile data storage media.

14. Method for the secured distribution of contents in a telecommunication network having the steps of:
making available (S1) encrypted contents (VN) and associated use-rights and decryption metadata (NMD, EMD) that have a revocation list for excluding functional units (4);
distributing (S2) the contents (VN) and the associated metadata (MD) in the telecommunication network;
evaluating (S3) the revocation list of the use-rights metadata (NMD); and
actuating (S4) a terminal (3) of the telecommunication network on the basis of the evaluation of the revocation list and its included functional units (4) when a functional unit (4) that is excluded for the content is ascertained, wherein the actuation comprises disabling of the terminal (3) and/or of a functional unit (4), restriction of a selection option for provided contents or updating of the terminal (3) by the terminal actuation unit (2).

15. Method according to Patent Claim 14 having the further steps of:
outputting (S5, S6) the encrypted contents (VN) and decryption metadata (EMD) to the terminal (3);
decrypting (S7) the encrypted contents (VN) on the basis of the decryption metadata (EMD); and
outputting (S8) the decrypted contents.

16. Method according to Patent Claim 15,
**characterized in that** a portion of the decryption metadata (EMD*) is output by a clearing house (CH).

17. Method according to either of Patent Claims 15 and 16,
**characterized in that** at least one portion of the decryption metadata (EMD) is output by a rights management unit (DRM) for managing digital use rights, and
the encrypted contents (VN) are output by a content provision unit.

18. Method according to one of Patent Claims 14 to 17,
**characterized in that** the distribution (S2) involves distribution of at least the use-rights metadata (NMD) to the inventory management unit (1), at least the decryption metadata (EMD) to the rights management unit (DRM) and at least the encrypted contents to the content provision unit (VS1-VSn).

19. Method according to one of Patent Claims 14 to 18,
**characterized by** the further step of:
handling purchase processing for an encrypted content between the terminal (3) and a content provider (CP).

20. Method according to one of Patent Claims 17 to 19,
**characterized in that** a complete set of decryption metadata (EMD) is compiled from the portion of the decryption metadata (EMD*) from the clearing house (CH) and the portion of the decryption metadata (MD-EMD*) from the rights management unit (DRM).

## Revendications

1. Dispositif de distribution sécurisée de contenus dans un réseau de télécommunication comportant :
une unité de gestion du parc (1) pour la gestion de terminaux (3), qui contiennent au moins une unité fonctionnelle (4), sur la base de métadonnées de droits d'utilisation (NMD) faisant partie d'un contenu crypté (VN) et présentant une liste de révocation pour l'exclusion d'unités fonctionnelles (4), et
une unité de commande de terminaux (2) pour commander les terminaux (3), l'unité de gestion du parc (1) comparant la liste de révocation avec une liste du parc d'unités fonctionnelles, et l'unité de commande de terminaux (2) commandant sélectivement le terminal (3) pour un contenu crypté respectif si, lors de la comparaison, une unité fonctionnelle (4) exclue pour le contenu est déterminée, la commande sélective incluant un blocage du terminal (3) et/ou d'une unité fonctionnelle (4), une possibilité limitée de sélection de contenus offerts ou une mise à jour du terminal (3) par l'unité de commande de terminaux (2).

2. Dispositif selon la revendication 1, comportant une interface vers un centre de facturation (CH) pour la mise à disposition d'au moins une partie des métadonnées de décryptage (EMD*) pour le contenu crypté (VN).

3. Dispositif selon la revendication 2, comportant une unité de gestion de droits (DRM) pour la mise à disposition de métadonnées (MD) faisant partie du contenu crypté (VN) et contenant au moins une partie restante de métadonnées de décryptage (EMD), et une unité de mise à disposition de contenus (VS1-VSn; TVK1-TVKn) pour la mise à disposition des contenus cryptés associés (VN).

4. Dispositif selon l'une des revendications 1 à 3, comportant une unité de gestion de contenus (CMS), laquelle comporte au moins une unité d'adaptation d'interface (SE1-SEm) pour l'adaptation, à un deuxième format de données, d'un premier format de données du contenu crypté (VN) et des métadonnées de droits d'utilisation et de décryptage associées (NMD, EMD), et une unité de distribution de données (CD), laquelle distribue le contenu crypté (VN) et les métadonnées de droits d'utilisation et de décryptage associées (NMD, EMD) dans le réseau de télécommunication.

5. Dispositif selon la revendication 4, **caractérisé en ce que** l'unité de distribution de données (CD) distribue au moins les métadonnées de droits d'utilisation (NMD) à l'unité de gestion du parc (1), au moins les métadonnées de décryptage (EMD) à l'unité de gestion de droits (DRM) et au moins le contenu crypté (VN) à l'unité de mise à disposition de contenus (VS1-VSn).

6. Dispositif selon l'une des revendications 1 à 5, comportant une unité de traitement d'achat (KV) pour le déroulement d'un traitement d'achat pour un contenu crypté (VN) entre le terminal (2) et un fournisseur de contenus (CP).

7. Dispositif selon la revendication 6, **caractérisé en ce que** l'unité de traitement d'achat (KV) amène l'au moins une partie des métadonnées de décryptage (EMD*) à l'unité de gestion de droits (DRM) qui fournit ainsi un jeu complet de métadonnées de décryptage (EMD).

8. Dispositif selon l'une des revendications 2 à 7, **caractérisé en ce que** le terminal (3) comporte un mélangeur de métadonnées (MDM) qui fournit un jeu complet de métadonnées de décryptage (EMD) à partir de l'au moins une partie des métadonnées de décryptage (EMD*) et d'un jeu incomplet de métadonnées (MD-EMD*).

9. Dispositif selon la revendication 8, **caractérisé en ce que** :
le terminal (3) comporte en outre une unité de gestion du parc décentralisée (1A) pour la gestion du terminal (3), l'unité de gestion du parc décentralisée (1A) comparant une liste du parc d'unités fonctionnelles avec des métadonnées de droits d'utilisation (NMD) fournies additionnellement par le centre de facturation (CH), et le mélangeur de métadonnées (MDM) commande sélectivement une unité fonctionnelle exclue (4) du terminal (3) pour un contenu crypté respectif si, lors de la comparaison, une unité fonctionnelle (4) exclue pour le contenu est déterminée.

10. Dispositif selon l'une des revendications 1 à 9, **caractérisé en ce que** l'unité fonctionnelle (4) est une unité de reproduction conforme à la gestion des droits qui décrypte le contenu crypté (VN) au moyen des métadonnées de décryptage (EMD).

11. Dispositif selon l'une des revendications 1 à 10, **caractérisé en ce que** le contenu crypté (VN) et les métadonnées associées (MD) sont additionnellement cryptés pour une transmission dans le réseau de télécommunication.

12. Dispositif selon l'une des revendications 4 à 11, **caractérisé en ce qu'**est amené à l'unité d'adaptation d'interface (SE1-SEm) un support de données mobile qui contient le contenu crypté (VN) et une partie des métadonnées (MD).

13. Dispositif selon l'une des revendications 1 à 12, **caractérisé en ce que** l'unité fonctionnelle (4) est une unité d'enregistrement conforme à la gestion des droits qui inscrit sur des supports de données mobiles un contenu crypté (VN) avec des métadonnées associées (MD).

14. Procédé de distribution sécurisée de contenus dans un réseau de télécommunication, comportant les étapes suivantes :
mise à disposition (S1) de contenus cryptés (VN) et de métadonnées de droits d'utilisation et de décryptage associées (NMD, EMD) qui comportent une liste de révocation pour l'exclusion d'unités fonctionnelles (4) ;
distribution (S2) des contenus (VN) et des métadonnées associées (MD) dans le réseau de télécommunication ;
évaluation (S3) de la liste de révocation des métadonnées de droits d'utilisation (NMD), et
commande (S4) d'un terminal (3) du réseau de télécommunication en fonction de l'évaluation de la liste de révocation et de ses unités fonctionnelles contenues (4) s'il y a détermination d'une unité fonctionnelle (4) exclue pour le contenu, la commande incluant un blocage du terminal (3) et/ou d'une unité fonctionnelle (4), une limitation d'une possibilité de sélection de contenus offerts ou une mise à jour du terminal (3) par l'unité de commande de terminaux (2).

15. Procédé selon la revendication 14, comportant les étapes supplémentaires suivantes :
émission (S5, S6) des contenus cryptés (VN) et de métadonnées de décryptage (EMD) au terminal (3) ;
décryptage (S7) des contenus cryptés (VN) sur la base des métadonnées de décryptage (EMD), et
émission (S8) des contenus décryptés.

16. Procédé selon la revendication 15, **caractérisé en ce qu'**une partie des métadonnées de décryptage (EMD*) est émise par un centre de facturation (CH).

17. Procédé selon l'une des revendications 15 ou 16, **caractérisé en ce que** :
au moins une partie des métadonnées de décryptage (EMD) est émise par une unité de gestion de droits (DRM) pour la gestion de droits d'utilisation numériques, et
les contenus cryptés (VN) sont émises par une unité de mise à disposition de contenus.

18. Procédé selon l'une des revendications 14 à 17, **caractérisé en ce que**, lors de la distribution (S2), au moins les métadonnées de droits d'utilisation (NMD) sont distribuées à l'unité de gestion du parc (1), au moins les métadonnées de décryptage (EMD) sont distribuées à l'unité de gestion de droits (DRM) et au moins les contenus cryptés sont distribués à l'unité de mise à disposition de contenus (VS1-VSn).

19. Procédé selon l'une des revendications 14 à 18, **caractérisé par** l'étape supplémentaire suivante :
déroulement d'un traitement d'achat pour un contenu crypté entre le terminal (3) et un fournisseur de contenus (CP).

20. Procédé selon l'une des revendications 17 à 19, **caractérisé en ce qu'**un jeu complet de métadonnées de décryptage (EMD) se compose de la partie des métadonnées de décryptage (EMD*) du centre de facturation (CH) et de la partie des métadonnées de décryptage (MD-EMD*) de l'unité de gestion de droits (DRM).
